# EUROPEAN PATENT APPLICATION

(11) **EP 4 603 957 A1**
(43) Date of publication of application: **20.08.2025**
(21) Application number: 23891750.4
(22) Date of filing: 19.07.2023
(51) Int. Cl.: G06F 3/041, G06F 3/01, F21V 33/00

(54) **ELECTRONIC DEVICE HAVING TOUCH PAD ACTIVE REGION AND KEYBOARD**

(30) Priority: 15.11.2022 KR 20220152606; 21.12.2022 KR 20220180859
(71) Applicant: LG Electronics Inc., Yeongdeungpo-gu Seoul 07336 (KR)
(72) Inventor: JANG, Inkwi, Seoul 06772 (KR); CHO, Baul, Seoul 06772 (KR); CHOI, Jina, Seoul 06772 (KR); KIM, Yubin, Seoul 06772 (KR); IN, Joungkun, Seoul 06772 (KR); PARK, Chanwook, Seoul 06772 (KR)
(74) Representative: Vossius & Partner Patentanwälte Rechtsanwälte mbB
(86) International application number: PCT/KR2023/010377
(87) International publication number: WO 2024/106676

(57) **Abstract**

This electronic device having a keyboard comprises: a display configured to display screen information; and a base part operatively coupled to the display, including a keyboard region, and configured to sense a touch input. The base part may comprise: a touch pad region which senses a touch input and includes at least one light source; and a lighting lens portion which is formed along both sides of the touch pad region. If a touch input is sensed on the touch pad region, light may be emitted from at least one side of the touch pad region.

## Description

### Technical Field

The disclosure relates to an electronic device including a touch pad active region and a keyboard. One or more embodiments relate to an electronic device that includes a display and a keyboard and has a haptic and touch pad active region to which an optical module is applied.

### Background Art

Electronic devices may be divided into mobile/portable terminals and stationary terminals according to mobility. Also, the electronic devices may be classified into handheld types and vehicle mount types according to whether or not a user may directly carry.

Functions of electronic devices are diversifying. Examples of such functions include data and voice communications, capturing images and video via a camera, recording audio, playing music files via a speaker system, and displaying images and video on a display. Some electronic devices include additional functionality which supports electronic game playing, while other terminals are configured as multimedia players. In some embodiments, in recent time, mobile terminals may receive broadcast and multicast signals providing visual contents, such as video or television programs.

Currently, touch interfaces are provided in many electronic devices. For example, touch screens are disposed as touch interfaces in not only portable electronic devices such as mobile phones, smart phones, tablet computers, laptop computers, personal digital assistants (PDAs), portable multimedia players (PMPs), digital cameras, portable game consoles, MP3 players, etc., but also electronic devices implemented as stationary terminals such as automated teller machines (ATMs), information retrieval machines, unmanned ticket machines, etc.

In conjunction with these touch interfaces, a haptic technology, which provides a sense of touch to a user as a way to enhance user experience, is attracting attention. Upon using such a haptic technology, various types of tactile sensations are provided to a user when the user interacts with digital objects, ultimately providing feedback that combines vision and tactile senses. Electronic devices using the haptic technology may provide users with more realistic touch interfaces than existing electronic devices.

In some embodiments, such touch interfaces may be provided in electronic devices implemented as mobile terminals. Among electronic devices implemented as mobile terminals, a laptop computer may be provided with a touch pad region in a separate area from a display. There is a need to intuitively provide the user with information as to whether a touch input has been properly applied to the touch pad region.

### Disclosure of Invention

### Technical Problem

The disclosure aims to solve the aforementioned and other problems, and an aspect of the disclosure is to provide an electronic device having a haptic and touch pad active region to which an optical module is applied.

Another aspect of the specification is to feedback whether a user input has been normally applied, through light emission in a specific region, by further arranging light-emitting elements on a substrate placed in a touch pad region.

Another aspect of the specification is to feedback whether a user input has been normally applied, through light emission in a specific region on glass arranged above a touch pad region.

Another aspect of the specification is to feedback whether a user input has been normally applied through haptic elements arranged below a touch pad region.

Another aspect of the specification is to provide feedback to a user on a current status of an electronic device according to power on/off and an execution of an application program.

### Solution to Problem

To achieve those aspects or other advantages, there is provided an electronic device having a keyboard that includes a display configured to display screen information; and a base portion operably coupled to the display, having a keyboard region, and configured to detect a touch input. The base portion may include: a touch pad region configured to detect a touch input, and including at least one light source; and a lighting lens portion formed along opposite sides of the touch pad region. Light may be emitted through at least one side of the touch pad region when a touch input is detected in the touch pad region.

According to an embodiment, the electronic device may further include a processor configured to control a color, brightness, or emission region of the emitted light according to an input pattern of the touch input.

According to an embodiment, the processor may control light of a first color, light of a second color, or light of a third color to be emitted through the opposite sides when a single touch input, a double touch input, or a triple touch input is input to the touch pad region.

According to an embodiment, the processor may change brightness of the light at a speed of a first slope when a drag touch input is applied to the touch pad region and a dragging speed of the drag input is a threshold speed or less, and may change the brightness of the light at a speed of a second slope greater than the first slope when the dragging speed exceeds the threshold speed.

According to an embodiment, the processor may control light to be emitted through only a left side or a right side when a detection point of a drag input on the touch pad region approaches the left side or the right side of the touch pad region by a first threshold distance or less.

According to an embodiment, the processor may increase the brightness of the light as the detection point approaches a left side or a right side while light is emitted through only the left side or the right side.

According to an embodiment, the processor may control the light to change in color or to blink when the detection point reaches the left side or the right side or approaches below a second threshold distance while light is emitted through only the left side or the right side.

According to an embodiment, the processor may detect a remaining battery capacity of the electronic device, and when the remaining battery capacity is lower than or equal to a first threshold value, the processor may control the light to be emitted at a first height through a slit region on a left side or a right side of the touch pad region. When the remaining battery capacity is lower than or equal to a second threshold value, the processor may control the light to be emitted at a second height through the slit region, and when the remaining battery capacity is higher than or equal to a third threshold value, may control the light to be emitted at a third height through the slit region. The second height may be higher than the first height, and the third height may be higher than the second height.

According to an embodiment, the processor may detect whether a first event of a file download completion, a second event of a new email reception, or a third event of a preset pattern occurs, and control emission and blinking of the light to be repeatedly performed in a slit region of a left side or a right side of the touch pad region or control an icon to be displayed in a region adjacent to an inside of the slit region when at least one of the first to third events is detected.

According to an embodiment, the processor may control the brightness and color of the light emitted through the at least one side of the touch pad region in conjunction with a backlight in the keyboard region or in conjunction with a function key associated with brightness adjustment of the keyboard region.

According to an embodiment, the processor may detect a keyboard input applied to the keyboard region or a motion input applied to the keyboard region, and deactivate a touch recognition chip arranged in the touch pad region so that the touch input is not recognized in the touch pad region when the detection is made.

According to an embodiment, the processor may change the color of the light emitted through a slit region of a left side or a right side of the touch pad region while deactivating the touch recognition chip when the detection is made.

According to an embodiment, the processor may detect whether an input device by which a different touch input is applicable, separate from a touch input to be applied to the touch pad region, is connected, and deactivate a touch recognition chip arranged in the touch pad region when the input device is connected.

According to an embodiment, the processor may detect whether an input device by which a different touch input is applicable, separate from a touch input to be applied to the touch pad region, has been connected or disconnected, and when the input device is connected or disconnected, may control the light to be emitted or to blink through a slit region of a left side or a right side of the touch pad region or changes the color or brightness of the emitted light.

According to an embodiment, the processor may detect ambient brightness information based on at least one of a camera, a light sensor, or a current time, and control brightness of a slit region of a left side or a right side of the touch pad region based on the ambient brightness information.

According to an embodiment, an emission state of one side region of the touch pad region may change when a single tap input is applied to the touch pad region. An emission state of another side region of the touch pad region may change when a double-tap input is applied to the touch pad region.

According to an embodiment, the base portion may include: glass arranged in a top region of the touch input region and configured to emit light through a specific region; a transparent layer arranged below the glass to transmit light from the light source therethrough; and an opaque layer arranged below the transparent layer to cut the light. The light may be emitted from a left side and a right side of the touch pad region through the transparent layer corresponding to a slot region of the opaque layer.

According to an embodiment, the light source may include a plurality of light-emitting elements. The light-emitting elements may be arranged in one axial direction of a substrate arranged in the touch pad region.

According to an embodiment, the lighting lens portion may include: a first part formed with a first thickness in a lower region of the light-emitting element; and a second part formed with a second thickness thicker than the first thickness at an end portion of the first part, and configured to allow light emitted from the light-emitting element to pass therethrough.

According to an embodiment, the lighting lens portion may include a third part formed with a third thickness thicker than the second thickness at an end portion of the second part, and configured to allow the light to be emitted through a specific region. An inner surface of the third part may be spaced apart from a side surface of the substrate to oppose the side surface of the substrate.

According to an embodiment, when the touch pad region is pressed, the processor may detect a touched region of any one of haptic sensors arranged on the substrate, and pressure applied to the touched region. The processor may control a haptic motor arranged on the substrate to vibrate the touched region.

### Advantageous Effects of Invention

Hereinafter, technical effects of an electronic device having a haptic and touch pad active region, to which an optical module is applied, according to the disclosure will be described.

According to the specification, an electronic device having a haptic and touch pad active region to which an optical module is applied may be provided, so that a user may intuitively receive information about a current status of the electronic device during the use of the electronic device.

According to the specification, light-emitting elements may be additionally arranged on a substrate arranged inside a touch pad region, to feedback whether a user input has been normally applied, by emitting light through a specific region, thereby forming a feedback region adjacent to a region where the user input has been applied.

According to the specification, a structural design and algorithm may be provided to feedback whether a user input has been normally applied, by emitting light through a specific region of glass arranged on a touch pad region.

According to the specification, an intuitive user interface may be provided to a user by controlling light emission through a slit region of a left side and/or a right side corresponding to opposite sides of a touch pad region, to suppress a touch input from being applied out of the touch pad region.

According to the specification, a haptic active region where haptic feedback associated with a touch input is provided may be provided to a user through an intuitive user interface.

According to the specification, a structural design and algorithm may be provided to feedback whether a user input has been normally applied through region-based control of light-emitting elements and haptic elements arranged below a touch pad region.

According to the specification, information about a current status of an electronic device may be fed back to a user according to power on/off and an execution of an application program, thereby improving intuitiveness and also improving aesthetics by applying a gradation of an emission region.

### Brief Description of Drawings

FIG. 1A is a view illustrating an electronic device that may include an integrated interface system with a haptic and touch pad active region to which an optical module is applied, according to the disclosure.
FIG. 1B is a partially exploded view of an electronic device according to the disclosure.
FIG. 2 is a view illustrating the configuration of an exemplary integrated interface system for an electronic device according to the disclosure.
FIG. 3A is a lateral perspective view and a rear perspective view of an electronic device having a touch pad region according to the disclosure.
FIG. 3B is an exploded perspective view illustrating components constituting the touch pad region of FIG. 3A.
FIG. 4A is a view of a stack structure in which a transparent layer and an opaque layer are arranged on a lower portion of glass according to the disclosure.
FIG. 4B is a view of a structure in which a substrate and a lighting lens structure are arranged on a lower portion of glass according to the disclosure.
FIG. 5 is an enlarged view of a substrate arranged below a touch pad region and a lighting lens portion surrounding the substrate, according to the disclosure.
FIG. 6 is a block diagram of an electronic device having a touch pad active region to which an optical module is applied, according to the disclosure.
FIG. 7 is a block diagram of an electronic device having a haptic and touch pad active region to which an optical module is applied, according to the disclosure.
FIGS. 8A to 8C are views of embodiments of controlling an emission region of a lighting lens portion based on a type of user input applied to an electronic device.
FIGS. 9A and 9B are views of embodiments of controlling brightness of an emission region by detecting movement of a user input applied to an electronic device.
FIGS. 10A and 10B are views of embodiments of controlling light to be emitted through a left side or right side of a touch pad region depending on a point at which a user input is detected in a touch pad region.
FIGS. 11A and 11B are views of embodiments of blinking or changing a color of a boundary region of a touch pad region when a user input is detected in the boundary region of the touch pad region.
FIGS. 12A to 12C are views of embodiments of controlling light emission in a touch pad region according to a remaining battery capacity of an electronic device.
FIGS. 13A and 13B are views of embodiments of controlling light emission in a touch pad region according to an event occurrence.
FIGS. 14A and 14B are views of embodiments of controlling light emission in a touch pad region according to brightness of a surrounding region in which an electronic device is being used.
FIG. 15 is a flowchart illustrating a method for controlling an electronic device having a haptic and touch pad active region to which an optical module is applied, according to the disclosure.
FIG. 16 is a flowchart illustrating a method for controlling an electronic device based on an event detection according to the disclosure.
FIG. 17 is a flowchart illustrating a method for controlling an electronic device according to an execution input and execution status of an application program according to the disclosure.

### Mode for the Invention

A description will now be given in detail according to exemplary embodiments disclosed herein, with reference to the accompanying drawings. For the sake of a brief description with reference to the drawings, the same or like components will be assigned the same reference numerals, and the description thereof will be omitted. Suffixes "module" and "unit" used for components used in the following description are merely intended for easy description of the specification, and each suffix itself is not intended to give any special meaning or function. In describing the embodiments disclosed herein, moreover, the detailed description will be omitted when a specific description for publicly known technologies to which the disclosure pertains is judged to obscure the gist of the disclosure. The accompanying drawings are used to help easily understand various technical features, and it should be understood that the embodiments presented herein are not limited by the accompanying drawings. As such, the disclosure should be construed to extend to any alterations, equivalents, and substitutes in addition to those which are particularly set forth in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be connected with the another element or intervening elements may also be present. In contrast, when an element is referred to as being "directly connected with" another element, there are no intervening elements present.

The singular forms are intended to include the plural forms as well, unless the context clearly indicates otherwise.

Terms "include" or "has" as used herein should be understood that they are intended to indicate the existence of a feature, a number, a step, an element, a component, or a combination thereof disclosed in the specification, and it may also be understood that the existence or additional possibility of one or more other features, numbers, steps, elements, components, or combinations thereof are not excluded in advance.

Electronic devices described herein may be implemented using a variety of different types of terminals. Examples of such devices may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings may be equally applied to other types of terminals, such as those types noted above. In addition, these teachings may also be applied to stationary terminals, such as digital TV, desktop computers, digital signages, and the like.

Embodiments described herein generally relate to portable electronic devices (e.g., portable computers, notebook computers, laptop computers, etc.) having a top portion of an enclosure, which is formed of a dielectric material such as plastic, ceramic, glass, composites, or combinations thereof. A component formed of a dielectric material may define a portion of an interior volume of an enclosure for housing various components of a portable device, and may also define an input surface of an integrated interface system that allows for a wide variety of touch and keyboard inputs. In particular, an integrated interface system may act as a trackpad or a keyboard or may provide both trackpad and keyboard functions, and a dielectric component may define all or part of keyboard and trackpad zones.

In some embodiments described herein, an integrated interface system may be integrated with a plurality of sensors, including touch and force sensors, which may detect various types of inputs applied to various zones of an input surface. In some examples, the touch and/or force sensors are formed in a unitary structure configured to detect key inputs applied to a keyboard zone (which may include mechanical and/or virtual keys) as well as touch inputs applied to a non-keyboard zone. According to embodiments described herein, an integrated interface system may also be used to detect gestures and multi-touch inputs applied to the keycaps of a mechanical keyboard, allowing keycaps and keyboard zone to function as a trackpad.

The integrated interface system may also provide various types of output functionality, including visual outputs, haptic outputs, etc. For example, images of affordances (e.g., keys, keyboards, buttons, sliders, dials, etc.) may be displayed on a top case (e.g., by using a display device) to indicate where touch or force inputs may be applied. As another example, the top case of the integrated interface system may be configured to move or vibrate to provide tactile or haptic outputs in response to detection of touch or force inputs. Therefore, the integrated interface system may provide comprehensive input and output functions through an integrated input/output surface.

As mentioned above, a component defining the input surface of the integrated interface system may be formed of a continuous and/or seamless sheet of dielectric material such as glass, plastic, or ceramic (e.g., the component may be a single glass member). The sheet may have properties that enable the various input and output functions described herein. For example, the sheet may have strength and high resistance to scratching, and provide a surface finish that has a superior appearance and/or feel compared to other materials or components. The sheet is also dielectric and/or substantially non-conductive, and thus touch and force inputs may be detected through the sheet and electromagnetic waves and/or fields (e.g., radio frequency signals, induced power, guided signals, and other wireless communications or electromagnetic energy transfer) may be allowed to pass through the sheet without substantial attenuation. The sheet may be continuous or seamless, which may help suppress the introduction of liquids or other foreign debris. The sheet is also light-transmissive, and thus may allow images or light to be seen therethrough. As used herein, light transmission may be used to refer to being transparent, translucent, or otherwise allowing light to propagate therethrough. In some examples, transparent materials or components introduce partial diffusion, lensing effects, distortions, etc. (e.g., due to surface textures), while still allowing objects or images to be visible through the materials or components. Such deviations are understood to be within the scope of the meaning of transparency. Additionally, transparent materials may be coated, painted, or otherwise processed to create non-transparent (e.g., opaque) components; in such cases, even though the material may be part of an opaque component, the material may still be referred to as being transparent. On the other hand, translucent components may be formed by creating a textured or frosted surface on a transparent material (e.g., transparent glass). Translucent materials, such as translucent polymers, translucent ceramics, etc., may also be used.

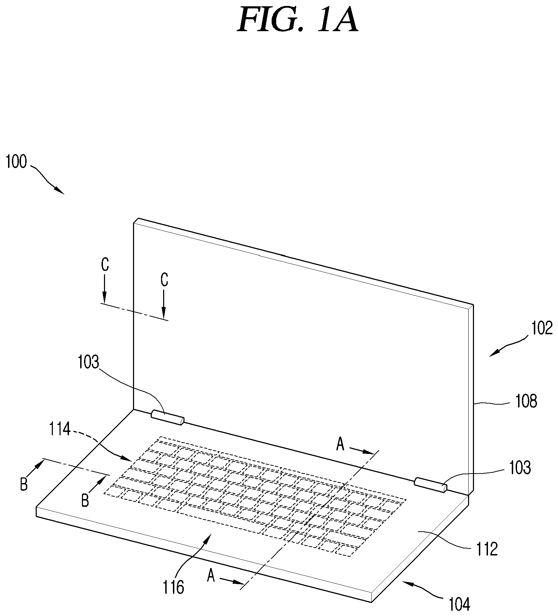

FIG. 1A is a view illustrating an electronic device that may include an integrated interface system with a haptic and touch pad active region to which an optical module is applied, according to the disclosure. In particular, a base portion 104 of an electronic device 100 may include a top case 112 that defines a portion of an enclosure and forms or is part of an integrated interface system described herein.

The electronic device 100 may be a portable computer also known as a notebook or laptop computer, or a similar device, which includes display part 102 and a base portion 104 that is coupled flexibly or pivotally coupled to the display part 102, such that the display part 102 may be rotated, pivoted, bent, articulated, or otherwise moved relative to the base portion 104. The display part 102 includes a display, also referred to as a primary display, which provides a primary means of conveying visual information to a user, by displaying graphical user interfaces. The base portion 104 is configured to receive various types of user inputs, such as keyboard inputs (e.g., typing), touch inputs (e.g., gestures, multi-touch inputs, swipes, taps, etc.), and the like. The base portion 104 may also provide outputs for conveying information to the user using, for example, indicator lights, haptic output devices, displays mounted on the base portion 104, etc. In some examples, providing various types of inputs and outputs through base portion 104 is facilitated or enabled by using the continuous top surface on the base portion 104, as described herein.

The display part 102 and the base portion 104 may be coupled to each other such that they may be located on open and closed positions. In the open position, the user may be able to apply inputs to the electronic device 100 through the base portion 104 and simultaneously output information on the display part 102. In the closed position, the display part 102 and the base portion 104 are folded relative to each other. More specifically, the display part 102 and the base portion 104 may be hinge-coupled to each other (e.g., through a pivot mechanism or hinge 103) to form a clamshell device that is movable between open and closed configurations.

Information and/or data may be transferred between display part 102 and base portion 104. For example, display data, such as data or signals that cause the display part 102 to display images, user interfaces, application data, etc., may be transmitted from the base portion 104 to the display part 102. Similarly, input data may be transmitted from display part 102 to base portion 104. The input data may include data regarding touch inputs applied to a touch screen within the display part 102, sensor data (e.g., from sensors within the display part 102, such as light sensors, accelerometers, etc.), camera data (e.g., from a camera within the display part 102), etc. The electronic device 100 may include any suitable communication system, for example, wired or wireless communication systems for transferring data between the display part 102 and the base portion 104. The wireless communication systems may include a first transmitter/receiver in the display part 102 and a second transmitter/receiver in the base portion 104 that performs communication with the first transmitter/receiver. The first and second transmitters/receivers may communicate in any suitable manner, and may use any suitable radio frequency or frequencies (e.g., 2.4 GHz, 60 GHz), communication protocol(s), etc. The first and second transmitters/receivers may also perform communication through an optical communication link.

Power may also be transmitted between the base portion 104 and the display part 102. For example, either or both of the base portion 104 and the display part 102 may include batteries or other power sources. Power may be transmitted from one part to another, as needed, based on power demands and power supplies of each part. For example, the base portion 104 and display part 102 may include batteries as well as components that require power. Power may be distributed from any battery to any circuit or component requiring power, regardless of the location of the battery, circuit, or component. Power may be transmitted between the base portion 104 and the display part 102 using any suitable components and techniques. For example, a wired or physical power connection may couple the display part 102 to the base portion 104. As another example, power may be transmitted wirelessly through inductive or capacitive power transfer systems.

As mentioned above, the base portion 104 may include a top case 112. The top case 112 may define or be a part of the integrated interface system of the electronic device 100. For example, the top case 112 may define a top outer surface of the base portion 104 and may be configured to receive touch inputs, force inputs, keyboard inputs, etc. In some examples, the entire top surface (or substantially entire top surface) of the top case 112 may be sensitive to touch and/or force, and may detect touch inputs on substantially any positions along its surface including not only the keyboard zone but also peripheral zones. In cases where the entire top case 112 is sensitive to touch and force, many types of inputs are enabled through the top case 112. For example, as described herein, touch inputs, including cursor-control gestures, may be applied to any positions on the top case that includes keys of a virtual or mechanical keyboard. As another example, since force sensing systems may allow a device to distinguish a finger placed on a key from a finger actually tapping or pressing a key, an addition of force sensing across the keyboard zone as well as non-keyboard zones may facilitate detection of typing inputs when a plurality of fingers are placed on a virtual keyboard.

In addition to receiving or detecting inputs, the top case 112 may be configured to provide outputs to a user. For example, the top case 112 may have or be integrated with displays, light sources, haptic actuators, and the like, which provide outputs detectable through the top case 112 (on arbitrary positions or substantially arbitrary positions along the top surface of the top case 112). More specifically, the display may be configured to generate an image on the top case 112, and the haptic actuator may be configured to move the top case 112 in a manner of being detectable by a user who touches the top case 112. The composition and configuration of the top case 112 may facilitate and integrate these (and other) input and output functions. For example, the continuous non-conductive top case 112 (e.g., formed of a dielectric such as glass, plastic, ceramic, composites, or a combination of those materials) may allow inputs to be detected through the top case 112, and also provide an effective platform for haptic and visual outputs.

The top case 112 may define or include input zones such as a keyboard region 114 and a touch pad region 116. The keyboard region 114 may correspond to or include a virtual keyboard or a mechanical keyboard.

The top case 112 may define a continuous top surface of the base portion 104, which may be a top outer surface of the base portion 104. The continuous top surface (and more generally a continuous top case) may refer to a surface or member that does not have any seams, openings, through-holes, or other discontinuous portions. Accordingly, in the context of the top case 112, a continuous top case or continuous top surface may not have seams, openings, through-holes, or other discontinuous portions within a portion of the top case 112 which defines the top outer surface of the base portion 104. More specifically, the top case 112 may not have openings for keys, keyboards, trackpads, buttons, etc. The top case 112 may extend substantially to outer edges of the base portion 104. Accordingly, the top case 112 may suppress or reduce the possibility that liquid, dust, other contaminants, or debris are introduced into the base portion 104 through the top surface of the top case 112. Additionally, the continuous surface provides a desirable aesthetic and touch-sensitive haptic and visual output surface that may utilize the exposed entire top surface of the top case 112.

The top case 112 may be formed of or include a light-transmissive material such as glass, plastic, or light-transmissive ceramic. In some examples, the top case 112 is a single glass member, a single plastic member, or a single member which is the same as a single member that is made of or includes any other suitable material. In other examples, the top case 112 may be formed of a plurality of members, which are made of the same material or different materials and bonded, adhered, fastened, or otherwise coupled together to define the top case 112.

In some examples, all or a portion of the top case 112 may be masked to form opaque zones. Masking may be performed by any suitable techniques, such as depositing an ink, dye, or film, or otherwise placing an opaque material beneath the top case 112 (and on any other components or layers that are intended to remain hidden or blocked). The masking or other opaque material or layer may have any desired color. In fact, because the top case 112 may be light-transmissive (e.g., transparent), there may be fewer restrictions on achievable colors than those in the related art devices. For example, certain colors, finishes, or other optical treatments may be difficult or impossible to be achieved in an uncoated opaque plastic material. By using the light-transmissive or transparent top case 112, it may be possible to achieve devices with more available colors and/or finishes (e.g., mirror finishes, metal flake finishes, etc.). In some examples, images, photos, paintings, or other graphic contents may be viewed through the light-transmissive top case 112.

The touch pad region 116 may be configured to detect a touch-based input and/or a force-based input, and may be or may include an arbitrary portion of the top case 112 substantially including the entire top case 112, which includes a keyboard region 114, a trackpad zone, a virtual key zone, optional sidewalls of the top case, or an arbitrary other portion of the top case 112. In some examples, substantially the entire top case 112 may define a touch-sensitive input zone from edge to edge. In this manner, and as discussed herein, touch or trackpad inputs such as clicks, taps, gestures (e.g., swiping, pinching), and multi-touch inputs may be detected on an arbitrary portion of the top case 112 including the keyboard region 114. Additionally, even if the keyboard region 114 includes mechanical key mechanisms, the touch pad region 116 may detect touch inputs (e.g., gestures) applied directly to keycaps rather than to the top case 112. As used herein, the term "key" refers to a mechanical key, a virtual key (e.g., a key displayed by an underlying display), or a key zone (e.g., defined by a mask layer on the top case), any other suitable types of keys described herein, any associated mechanisms, keycaps, or support structures.

The electronic device 100, particularly the top case 112, may also include or define output zones, such as visual-output zones and haptic-output zones. The haptic-output zones include zones of the top case 112 that may be moved or otherwise induce tactile sensations to the user. The visual-output zones include zones in which visual outputs are generated (e.g., to display virtual and/or dynamic keys), such as zones associated with lights or displays. Exemplary visual- and haptic-output zones as well as components for generating visual and haptic outputs are described herein.

Accordingly, the electronic device 100 may include a top case that defines an integrated interface system that provides various input and output functions including keyboard inputs, touch inputs, visual outputs, and haptic outputs.

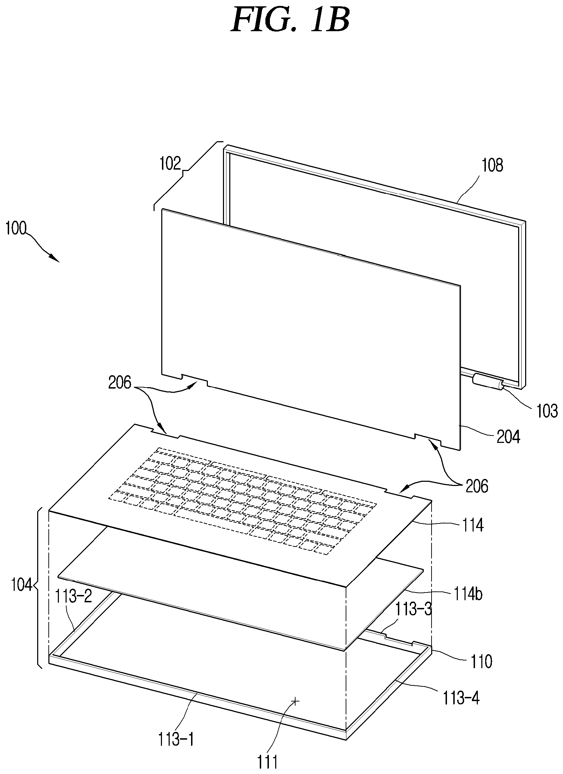

FIG. 1B is a partially exploded view of an electronic device according to the disclosure. As described above, the electronic device 100 includes the top case 112 that forms part of the enclosure defining the base portion 104, and also defines the top outer surface of the base portion 104, which also acts as an input surface of the integrated interface system for receiving user inputs. As illustrated in FIG. 1B, the base portion 104 may be pivotally coupled to the display part 102 to form a foldable or clamshell type notebook computer.

As illustrated in FIG. 1B, the display part 102 includes a display 204 coupled to a display housing 108. The display 204 may include various display components, such as liquid crystal display (LCD) components, light source(s) (e.g., light emitting diodes (LEDs) or organic LEDs (OLEDs)), filter layers, polarizers, light diffusers, covers (e.g., glass or plastic cover sheets), etc. More specifically, in some examples, the display 204 includes a display stack (e.g., including an LCD, polarizing films, light diffusing films, and/or rear or side light), and a cover disposed on the display stack and forming an external user-facing surface of the display 204. In other examples, the display 204 includes the display stack as described above, but does not include a separate cover. In such cases, a side portion or surface of the LCD panel of the display stack may form the external user-facing surface of the display 204. The display part 102 may also include other components, such as structural components that support any of the components described above, batteries, wired or wireless communication components, processors, a memory, etc.

The display part 102 may include mechanisms 103 or portions thereof coupled to or integrally formed with the display part 102. For example, the display housing 108 may include hinges (or portions thereof) that are welded, soldered, adhered, or otherwise attached to the display housing 108. The display 204 and the top case 112 may include feature portions 206 (such as notches illustrated in FIG. 1B) which allow the disposition of the mechanisms 103 while allowing the display 204 and the top case 112 to define substantially the entire user interface surfaces of the display part 102 and the base portion 104.

The base portion 104 may include a bottom case 110 and the top case 112 described above, both of which define the interior volume of the base portion 104. The base portion 104 may also include in its interior volume components 208, such as processors, memory devices, circuit boards, input/output devices, haptic actuators, wired and/or wireless communication devices, communication ports, disk drives, etc. As described above, the top case 112 may be a continuous surface (e.g., without any holes or openings in its top surface) which reduces the possibility of damages on the components 208 by suppressing or restricting an introduction of liquids, debris, or other contaminants into the interior volume.

The bottom case 110 may include a bottom member 111 and one or more side walls 113-1 to 113-4. In some examples, the bottom case 110 has one, two, three, or four side walls. When the bottom case has three side walls, the side wall 113-3 may be omitted. When the bottom case has two side walls, the side walls 113-2 and 113-4 may be omitted. When the bottom case has one side wall, the only side wall may be the side wall 113-1. Of course, other configurations of the side walls are also possible.

The bottom case 110 may be formed of or include any suitable material. For example, the bottom case 110 may be formed of or include a metal (e.g., steel, aluminum, or titanium), glass, plastic, ceramic, composite, or any other suitable material or a combination of these or other materials. In some examples, the bottom case 110 is a single (e.g., monolithic) component or member, for example, a single sheet of glass, metal, plastic, etc. For example, the bottom case 110 may be a single component formed of a single piece of metal and may be formed by stamping, drawing, machining, hydroforming, molding, or any other suitable process. When the bottom case 110 is a single component, the bottom member 111 and side wall(s) 113 may be an integral structure (e.g., a monolithic component).

The top case 112 may be coupled to the bottom case 110 in any suitable manner. Various examples of coupling between the top case 112 and the bottom case 110, and various configurations and shapes of the top and bottom cases 112 and 110 will be described herein. Similarly, exemplary configurations of the display 204 and the display housing 108 (and techniques for combining them) will be described herein.

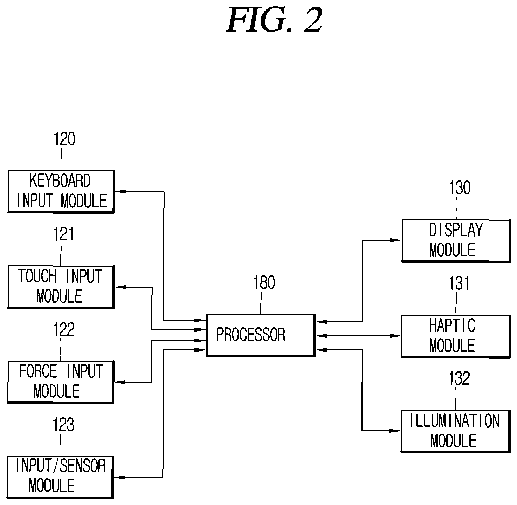

FIG. 2 is a view illustrating the configuration of an exemplary integrated interface system for an electronic device according to the present disclosure. Functions of an integrated interface system 118 may be performed by any of components and structures described herein, which include touch sensors, force sensors, haptic actuators, displays, mechanical keys, light sources, etc., and examples thereof will be described herein.

Referring to FIG. 2, the integrated interface system may be configured to include a keyboard input module 120, a touch input module 121, a force input module 122, and an input and/or sensor module 123. The integrated interface system 118 may be configured to further include a display module 130, a haptic module 131, and an illumination module 132. The processor 180 may be operably coupled to each module constituting the integrated interface system 118. The processor 180 may be operably coupled to the keyboard input module 120, the touch input module 121, the force input module 122, and the input and/or sensor module 123. The processor 180 may be operably coupled to the display module 130, the haptic module 131, and the illumination module 132.

The integrated interface system 118 provides a keyboard input module 120. The keyboard input module 120 includes detections of key-based or similar inputs including inputs (e.g., alphanumerical and/or symbolic character inputs, function key selections, or arrow key selections) which are typically applied through a keyboard. A device (e.g., the electronic device 100) may use any suitable input mechanism(s), such as mechanical keys, touch sensors, force sensors, displays, etc., to operate the keyboard input module 120. When the device includes mechanical keys or key mechanisms, the keyboard input module 120 includes detection of physical movements of the key mechanisms. When the device includes virtual keys, the keyboard input module 120 may include detection of touch or force inputs on the virtual keys. In either example, the keyboard input module 120 may detect keyboard inputs through an input surface (such as the top case 112 in FIG. 1A).

The integrated interface system 118 also provides a touch input module 121. The touch input module 121 includes detection of touch-based inputs such as clicks, taps, gestures (e.g., swiping, pinching), multi-touch inputs, etc. These inputs may be similar to or include inputs detected by a trackpad in the related art. For example, such inputs may include gestural inputs that may be used to control a cursor or element of a graphical user interface on the display of the device. The device (e.g., the electronic device 100) may use any suitable input mechanism(s), such as capacitive touch sensors, resistive touch sensors, sonic sensors, etc., to operate the touch input module 121. Such mechanisms may be associated with or cover substantially the entire user-facing portion of the top case 112. In this way, the touch input module 121 may detect touch inputs applied to arbitrary positions on the top case 112 (e.g., including a mechanical or virtual keyboard, a trackpad zone below the mechanical or virtual keyboard, and/or portions of the top case adjacent to side portions of the mechanical or virtual keyboard).

The touch input module 121 may include detection of touch inputs received on a keyboard zone of the top case 112 (e.g., the keyboard region 114 in FIG. 1A). The keyboard zone, as described above, may correspond to a keyless surface of a virtual keyboard or may correspond to a zone of the top case 112 including mechanical keys. In either example, the touch input module 121 may include detection of touch inputs, such as clicks, taps, gestures (e.g., swiping, pinching), and multi-touch inputs, which are applied to the keyboard zone. When mechanical keys or key mechanisms are used, the touch input module 121 may include detection of touch inputs through the mechanical keys or mechanisms.

The touch input module 121 may also include detection of touch inputs applied to a non-key zone of the top case 112. For example, arbitrary zones of the top case 112 that do not correspond to the keyboard zone (non-keyboard zone) may be configured to receive touch inputs, and the device may also detect touch inputs in these zones.

The integrated interface system 118 also provides a force input module 122 that includes detection of force inputs and/or force components of touch inputs. The device (e.g., the electronic device 100) may use any suitable force sensors to provide the force input module 122. The force input module 122 may include detection of force inputs on any position on the top case 112. For example, substantially the entire top surface of the top case 112 may be configured to receive and/or detect force inputs applied to substantially any position on the top surface of the top case 112. Additionally, when the top case 112 includes a dielectric surface or is formed of a dielectric sheet (e.g., glass, plastic, ceramic, etc.), the dielectric and/or mechanical properties (or other properties) of the dielectric material may facilitate detection of force inputs at any suitable position on the top case (e.g., on the keyboard region 114, a non-keyboard zone, or any other suitable position).

The integrated interface system 118 also provides a display module 130 that includes output of images or other visual information through the top case 112. For example, the device (e.g., the electronic device 100) may include or communicate with displays that are disposed within the electronic device 100 and generate images to be viewable on the top case 112, and accordingly provides the display module 130. The displays may be used to generate images of keys (or other affordances) for the keyboard region 114, for example. The displays may also be used to define input zones, buttons, or other affordances or display other graphical objects (e.g., image, videos, text, user interfaces, etc.) at arbitrary positions on the top case 112 (e.g., to indicate a position and/or function of an input). The top case 112 may be formed of glass or other transparent material. Accordingly, the top case 112 may operate as a screen even on opaque surfaces, such as a portion bordering a keyboard or a trackpad, in the electronic device. To this end, the displays may be integrated with the top case 112.

The integrated interface system 118 also provides a haptic module 131 that includes generation of haptic or tactile outputs on the top case 112. The device (e.g., the electronic device 100) may use haptic actuators to operate the haptic module 131. The haptic actuators may be coupled to the top case 112, or otherwise may cause the top case 112 to be physically moved so as to generate haptic outputs on the top case 112. The haptic outputs may be used for various purposes, such as indicating that a touch input (e.g., key selection or trackpad selection) has been detected by the electronic device 100.

The integrated interface system 118 also provides an illumination module 132 that includes illumination of zones or elements of the top case 112. The device (e.g., the electronic device 100) may use light sources to provide lighting (illumination) functionality. For example, a glass, plastic, or otherwise light-transmissive top case (e.g., the top case 112) may act as a light guide. For example, the glass or light-transmissive (e.g., transparent or translucent) top case 112 may act as a light guide to guide light from a light source toward other zones of the electronic device 100, such as bottoms or surroundings of keycaps or other key mechanisms. Additionally, when the top case 112 has completely transparent or transparent portions, the transparent portions may allow images from the underlying displays to pass through the top case 112, which is not possible in opaque top cases. The illumination module 132 may also provide backlighting or other lighting for the displays.

The integrated interface system 118 also provides one or more additional input and/or sensor modules 123. The device (e.g., the electronic device 100) may use any suitable components to receive inputs (e.g., from a user or another computer, device, system, network, etc.) or detect any appropriate attributes or parameters of the device, a surrounding environment of the device, and people or objects interacting with the device (or near the device). For example, the device may include accelerometers, temperature sensors, position/orientation sensors, biometric sensors (e.g., fingerprint sensors, venous wave, blood-oxygen sensors, blood sugar sensors, etc.), eye-tracking sensors, retinal scanners, humidity sensors, buttons, switches, lid-closure sensors, etc. Such sensors and/or input devices may be located on any suitable portions of the device or on any suitable locations within the device. For example, the sensors and/or input devices may be located on the display part 102 or the base portion 104 (or they may include components in both the display part 102 and the base portion 104). The input and/or sensor module 123 may use network and/or communication systems in order to receive commands, data, information, contents (e.g., audio, video, images, web data, etc.), and the like from other devices or systems, to provide input and/or sensing functionality.

Hereinafter, an electronic device having a haptic and touch pad active region to which an optical module is applied according to the disclosure will be described. In this regard, currently, touch interfaces are provided in many electronic devices. For example, touch screens are disposed as touch interfaces in not only portable electronic devices such as mobile phones, smart phones, tablet computers, laptop computers, personal digital assistants (PDAs), portable multimedia players (PMPs), digital cameras, portable game consoles, MP3 players, etc., but also electronic devices implemented as stationary terminals such as automated teller machines (ATMs), information retrieval machines, unmanned ticket machines, etc.

In conjunction with these touch interfaces, a haptic technology, which provides a sense of touch to a user as a way to enhance user experience, is attracting attention. Upon using such a haptic technology, various types of tactile sensations are provided to a user when the user interacts with digital objects, ultimately providing feedback that combines vision and tactile senses. Electronic devices using the haptic technology may provide users with more realistic touch interfaces than existing electronic devices.

Meanwhile, such touch interfaces may be provided in electronic devices implemented as mobile terminals. Among electronic devices implemented as mobile terminals, a laptop computer may be provided with a touch pad region in a separate area from a display. There is a need to intuitively provide the user with information as to whether a touch input has been properly applied to the touch pad region.

The disclosure aims to solve the aforementioned and other problems, and an aspect of the disclosure is to provide an electronic device having a haptic and touch pad active region to which an optical module is applied. Another aspect of the specification is to feedback whether a user input has been normally applied, through light emission in a specific region, by further arranging light-emitting elements on a substrate placed in a touch pad region. Another aspect of the specification is to feedback whether a user input has been normally applied, through light emission in a specific region on glass arranged above a touch pad region. Another aspect of the specification is to feedback whether a user input has been normally applied through haptic elements arranged below a touch pad region.

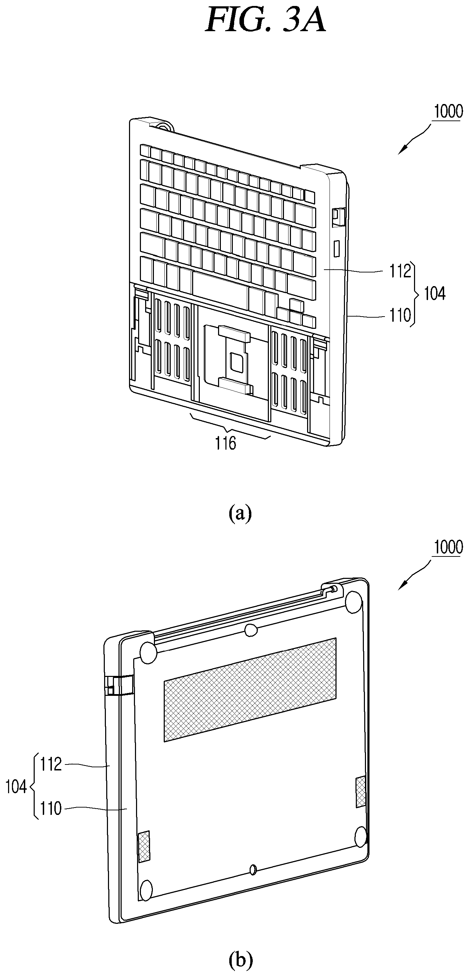

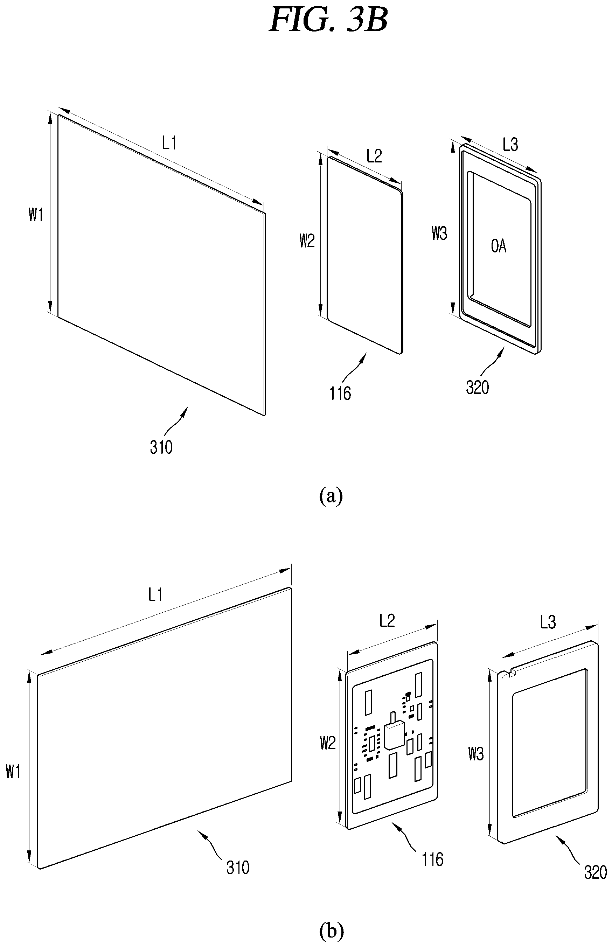

Hereinafter, an electronic device having a haptic and touch pad active region to which an optical module is applied according to the disclosure to achieve those aspects will be described in more detail, with reference to the accompanying drawings. In this regard, FIG. 3A is a lateral perspective view and a rear perspective view of an electronic device having a touch pad region according to the disclosure. FIG. 3B is an exploded perspective view illustrating components constituting the touch pad region of FIG. 3A.

(a) of FIG. 3A is a lateral perspective view of the electronic device 100 having the touch pad region according to the disclosure. (b) of FIG. 3A is a rear perspective view of the electronic device 100 having the touch pad region according to the disclosure. Referring to (a) and (b) of FIG. 3A, the base portion 104 of the electronic device 100 may be configured to include a top case 112 and a bottom case 110. The top case 112 and the bottom case 110 may be implemented as separate cases, and the top case 112 and the bottom case 110 may be configured to be coupled to each other. As another example, the base portion 104 including the top case 112 and the bottom case 110 may be implemented as a single body (unibody). Referring to (b) of FIG. 3A, a user input region of the base portion 104 may be configured to include a keyboard region 114 and a touch pad region 116.

(a) of FIG. 3B is a front view illustrating glass 310, the touch pad region 116, and a lighting lens portion 320 sequentially stacked in a bottom region of the base portion 104 in (a) of FIG. 3A. (b) of FIG. 3B is a rear view illustrating the glass 310, the touch pad region 116, and the lighting lens portion 320 sequentially stacked in the bottom region of the base portion 104 in (a) of FIG. 3A. The glass 310 may have front and rear surfaces formed of a transparent material. The glass 310 may have a first length L1 and a first width W1 to cover the entire lower region of the base portion 104.

The touch pad region 116 may have a second length L2 and a second width W2 to cover a partial region of the bottom region. The touch pad region 116 may be a region in which the user may actually apply a touch and may be referred to as a touch pad active region. A substrate 340 may be arranged on the rear surface of the touch pad region 116, and a front surface of the substrate 340 may be made of a touchable material. Accordingly, the touch pad region 116 may be implemented as a touch pad module that includes a component capable of detecting a touch input and the substrate 340 on which the component is arranged.

The second length L2 of the touch pad region 116 may be shorter than the first length L1. The second width W2 of the touch pad region 116 may be shorter than the first width W1. Accordingly, only a portion of the bottom region of the base portion 104 may be formed as the touch pad (active) region 116 to which a touch input may be applied.

The lighting lens portion 320 may be formed in a rectangular shape with a hollow inside to surround the touch pad region 116. The lighting lens portion 320 may be formed as an opening area OA with the hollow inside. An outer portion of the lighting lens portion 320 may be formed to have a third length L3 and a third width W3. An inner portion of the lighting lens portion 320 may have the second length L2 and the second width W2, so that the touch pad region 116 may be inserted and coupled through the opening area OA. However, the inner portion of the lighting lens portion 320 is not limited to this and may alternatively be formed to be smaller than the second length L2 and the second width W2 in consideration of tolerances when coupled.

Hereinafter, an electronic device having a haptic and touch pad active region according to the disclosure will be described in detail, with reference to FIGS. 1A to 3B. The electronic device 100 may be configured to include a display 130 and a base portion 104.

The display 130 may be configured to display screen information. The base portion 104 may be operably coupled to the display 130. The base portion 104 may include a keyboard region 114 and a touch pad region 116. The touch pad region 116 may be a region on which a user's touch input is detected and may be referred to as a touch input region. As described above, the base portion 104 may be configured to include the glass 310, the touch pad region 116, and the lighting lens portion 320.

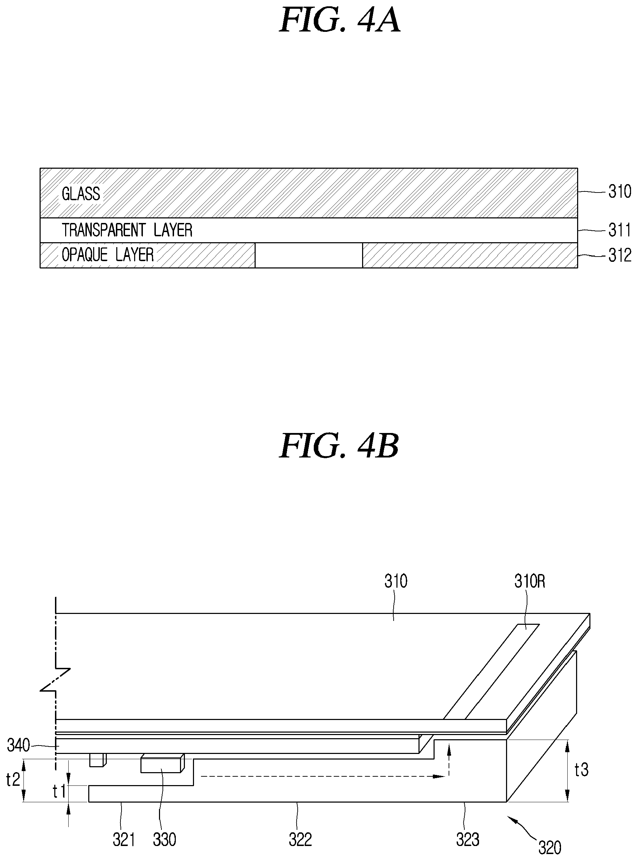

In some embodiments, the stack structure of the base portion according to the specification may be configured to emit light from light-emitting elements. With this regard, FIG. 4A is a view of a stack structure in which a transparent layer and an opaque layer are arranged on a lower portion of glass according to the disclosure. FIG. 4B is a view of a structure in which a substrate and a lighting lens structure are arranged on a lower portion of glass according to the disclosure.

Referring to FIGS. 1A to 4A, the base portion 104 may further include a transparent layer 311 and an opaque layer 312 formed below the glass 310. The transparent layer 311 may be arranged below the glass 310 and transmit light from a light source 330. The transparent layer 311 may be attached to the rear surface of the glass 310. The opaque layer 312 may be arranged below the transparent layer 311 to cut light from the light source 330.

The transparent layer 311 may be implemented in a transparent color, for example, white, by being printed on the rear surface of the glass 310. The opaque layer 312 may be implemented in an opaque color, for example, black, by being printed on the transparent layer 311. The transparent layer 311 and the opaque layer 312 may be sequentially attached to the rear surface of the glass 310, and thus the transparent layer 311 and the opaque layer 312 may be referred to as a first layer and a second layer, respectively. Light from the light source 330 may be emitted on a specific region 310R of the glass 310 of FIG. 4B through the transparent layer 311 corresponding to a slot region 312s of the opaque layer 312.

The opaque layer 312 may be arranged on opposite sides below the transparent layer 311. Accordingly, light from the light source 330 may be cut in opposite side regions where the opaque layer 312 is arranged. In another example, light from the light source may be transmitted through the slot region 312s in a central portion where the opaque layer 312 is not arranged.

Referring to FIG. 4B, the front surface of the glass 310 may be formed of a transparent material. A substrate 340 may be arranged on the rear surface of the glass 310. As illustrated in FIG. 4B, the lighting lens portion 320 may include a plurality of parts having different thicknesses. The lighting lens portion 320 may be configured to include a first part 321 and a second part 322. The lighting lens portion 320 may be configured to include a first part 321 through a third part 323.

The first part 321 may be formed with a first thickness t1 in the lower region of the light-emitting element 330 in a third axial direction. The light-emitting element 330 may be arranged at a position adjacent to one end portion of the first part 321. The light-emitting element 330 may emit light toward one end portion of the second part 322 connected to another end portion of the first part 321.

The another end portion of the first part 321 may be connected to the one end portion of the second part 322. The one end portion of the second part 322 may define an inner surface of the second part 322. The second part 322 may have a second thickness t2 which is thicker than the first thickness t1 of the first part 321. The second part 322 may be configured to allow light emitted from the light-emitting element 330 to pass therethrough. A light guide structure may be presented in which light emitted from the light-emitting element 330 is guided and concentrated through the lighting lens portion 320 which is formed in a step structure having the first thickness t1 and the second thickness t2.

Another end portion of the second part 322 may be connected to one end portion of the third part 323. The third part 323 may have a third thickness t3 which is thicker than the second thickness t2 at the end portion of the second part 323. The third part 323 may be configured so that light emitted from the light-emitting element 330 is emitted to the specific region 310R. The specific region 310R through which light is emitted may correspond to the slot region 312s of FIG. 4A through which light may be transmitted, but is not limited thereto and may change depending on the application.

Light which has passed horizontally through the second part 322 may be refracted upward through the third part 323. For example, a refractive element may be arranged in the third part 323 to refract light of a specific wavelength. As another example, light may be scattered and refracted upward by the step structure formed in the third part 323 even without a refractive element. A light guide structure may be presented in which light emitted from the light-emitting element 330 is guided and concentrated through the lighting lens portion 320 which is formed in a step structure having the first thickness t1 through the third thickness t3.

The one end portion of the third part 323 may define an inner surface of the third part 323. The inner surface of the third part 323 may be spaced apart to oppose a side surface of the substrate 340. Another end portion of the third part 323 may define an outer surface of the third part 323. A reflective sheet may be attached to the outer surface of the third part 323, so that light emitted from the light-emitting element 330 may be reflected and refracted upward again. Accordingly, light emitted along the lateral direction of the substrate 340 may be emitted to the upper region of the lighting lens portion 320, thereby being emitted on the specific region 310R.

Referring to FIGS. 1 to 4B, the glass 310 may be arranged in the touch input region 116. The glass 310 may be arranged in an upper region of the touch input region 116 to cover the touch input region 116. The glass 310 may be formed over an entire lower region of the keyboard region 114, including the touch pad region 116. The touch pad region 116 may be arranged in the lower region of the glass 310 and configured to recognize touch input. The touch pad region 116 may include at least one light source 330.

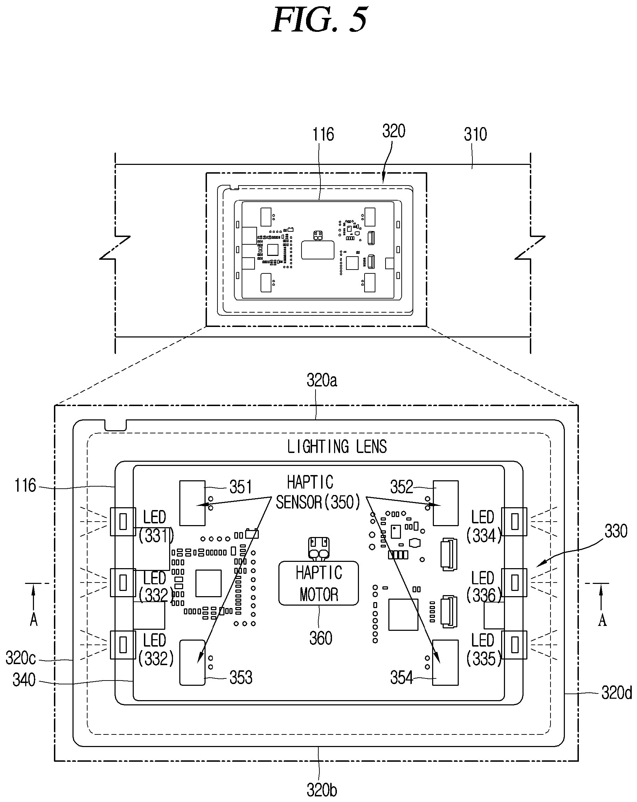

In this regard, FIG. 5 is an enlarged view of a substrate arranged below of a touch pad region and a lighting lens portion surrounding the substrate, according to the disclosure.

Referring to FIGS. 1A to 5, the touch input region 116 may be formed in a central region of the glass 310. The lighting lens portion 320 may be formed to surround the touch input region 116. The lighting lens portion 320 may be formed along a side region of the touch pad region 116.

As described above, the transparent layer 311 may be arranged below the glass 310 and transmit light from the light source 330. The transparent layer 311 may be attached to the rear surface of the glass 310. The opaque layer 312 may be arranged below the transparent layer 311 to cut light from the light source 330. The opaque layer 312 may be arranged on opposite sides below the transparent layer 311. Accordingly, light from the light source 330 may be cut in opposite side regions where the opaque layer 312 is arranged. In another example, light from the light source 330 may be transmitted through the slot region 312s in a central portion where the opaque layer 312 is not arranged.

The lighting lens portion 320 may be configured to include a top region 320a, a bottom region 320b, one side region 320c, and another side region 320d. The top region 320a of the lighting lens portion 320 may be coupled to an upper end portion of the substrate 340. The bottom region 320b of the lighting lens portion 320 may be coupled to a lower end portion of the substrate 340. One side region 320c of the lighting lens portion 320 may be coupled to one end portion of the substrate 340. Another side region 320d of the lighting lens portion 320 may be coupled to another end portion of the substrate 340.

The top region 320a may be connected to the one side region 320c and the another side region 320d. The top region 320a may be integrally connected to the one side region 320c and the another side region 320d. The bottom region 320b may be connected to the one side region 320c and the another side region 320d. The bottom region 320b may be integrally connected to the one side region 320c and the another side region 320d.

At least one light source 330 may be configured to include a plurality of light-emitting elements 331 to 336. The light-emitting elements 331 to 336 may be disposed on top, bottom, and central regions in a second axial direction of one side and another side in a first axial direction of the substrate 340 that is arranged in the touch pad region 116.

The number of light-emitting elements is not limited to six illustrated in FIG. 5 and may change depending on the application. As an example, the first and second light-emitting elements 331 and 332 may be arranged in an upper left region and a lower left region, and the third and fourth light-emitting elements 333 and 334 may be arranged in an upper right region and a lower right region. The fifth and sixth light-emitting elements 335 and 336 may be further arranged in a central left region and a central right region. As another example, the first to fourth light-emitting elements 331 to 334 may be arranged, and other light-emitting elements (for example, the fifth and sixth light-emitting elements) may further be arranged in the top and bottom regions.

The haptic sensors 350 may be configured to include a first haptic sensor 351 to a fourth haptic sensor 354 that are arranged on upper left, lower left, upper right, and lower right portions of the substrate 340. The number of haptic sensors 350 is not limited thereto and may vary depending on the application.

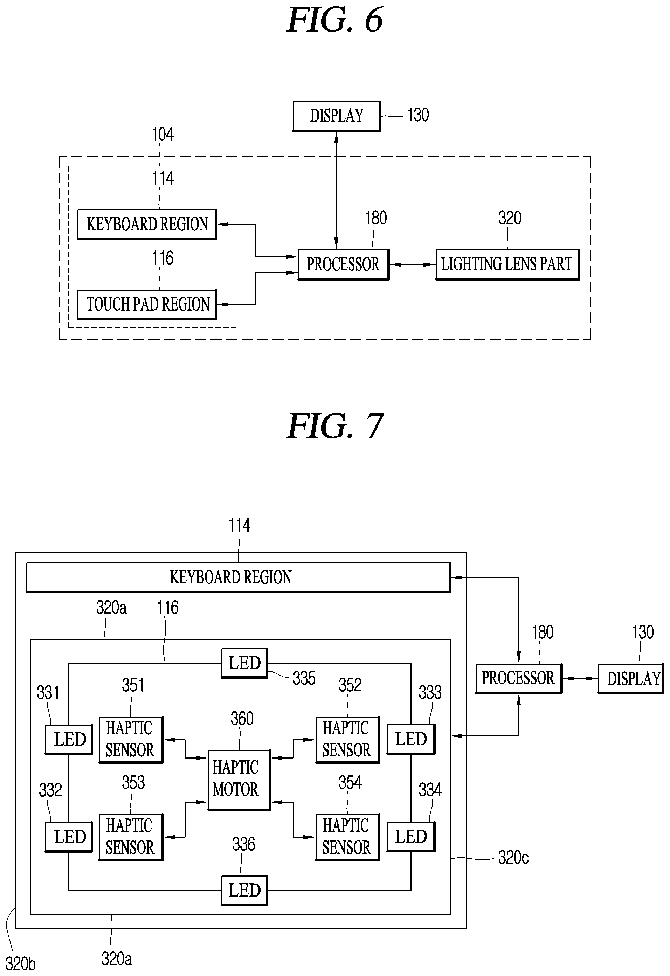

In some embodiments, in the electronic device according to the disclosure having the haptic and touch pad active region, to which the optical module is applied, light may be controlled to be emitted as a user input is applied to a power button or a touch pad region. In this regard, FIG. 6 is a block diagram of an electronic device having a touch pad active region to which an optical module is applied, according to the disclosure.

Referring to FIG. 6, the electronic device 100 may be configured to include a display 130, a base portion 104, and a processor 180. The electronic device 100 may be configured to include a keyboard region 114, a touch pad region 116, and a lighting lens portion 320 of the base portion 104. The processor 180 may be operably coupled to the keyboard region 114, the touch pad region 116, and the lighting lens portion 320. Accordingly, the processor 180 may detect a user input on the keyboard region 114 or the touch pad region 116. The processor 180 may control the lighting lens portion 320 to emit light according to a user input on the keyboard region 114 or the touch pad region 116 and/or a state of an application program.

Referring to FIGS. 1A to 6, the base portion 104 may include the keyboard region 114 and the touch pad region 116. The base portion 104 may be configured to include the glass 310, the touch pad region 116, and the lighting lens portion 320. The base portion 104 may further include a transparent layer 311 and an opaque layer 312 formed below the glass 310.

Referring to FIGS. 1A to 6, the processor 180 may detect that the power button arranged on the base portion 104 is pressed or a touch input is applied to the touch pad region 116. The processor 180 may be configured to control the light source 330 by detecting that the power button is pressed or a touch input is applied to the touch pad region 116. When the processor 180 detects that the power button is pressed or a touch input is applied, the processor 180 may control the light source 330 to emit light such that the light is emitted through the specific region 310R of the glass 310.

The processor 180 may control haptic sensors and a haptic motor arranged on the substrate 340 when the touch pad region 116 is pressed. In this regard, FIG. 7 is a block diagram of an electronic device having a haptic and touch pad active region to which an optical module is applied, according to the disclosure. Referring to FIG. 7, the electronic device 100 may be configured to include a display 130, a base portion 104, and a processor 180. The electronic device 100 may be configured to include a keyboard region 114, a touch pad region 116, and a lighting lens portion 320 of the base portion 104. The processor 180 may be operably coupled to the keyboard region 114, the touch pad region 116, and the lighting lens portion 320.

A plurality of light-emitting elements 331 to 336 may be arranged in the touch pad region 116 to be adjacent to the lighting lens portion 320. As an example, the first and second light-emitting elements 331 and 332 may be arranged in upper left region and lower left region of the touch pad region 116, as illustrated in FIG. 5. The third and fourth light-emitting elements 333 and 334 may be arranged in upper right region and lower right region of the touch pad region 116. The fifth and sixth light-emitting elements 335 and 336 of the touch pad region 116 may be further arranged in a central left region and a central right region. As another example, the first and second light-emitting elements 331 and 332 may be arranged in the upper left region and lower left region of the touch pad region 116, as illustrated in FIG. 7. The third and fourth light-emitting elements 333 and 334 may be arranged in the upper right region and lower right region of the touch pad region 116. The fifth and sixth light-emitting elements 335 and 336 may be arranged in the upper region and lower region of the touch pad region 116. In relation to this, alternatively, one light-emitting element may be arranged in the left and right regions of the touch pad region 116. Two light-emitting elements may also be arranged in the upper region and the lower region of the touch pad region 116.

The plurality of light-emitting elements 331 to 333 may be arranged above and below one side region of the touch pad region 116. The plurality of light-emitting elements 334 to 336 may be arranged in the top, bottom, and center of another side region of the touch pad region 116. The processor 180 may be configured to control the haptic sensors 350 and the haptic motor 360 arranged in the touch pad region 116.

The plurality of haptic sensors 350 may be arranged in different regions of the touch pad region 116. The plurality of haptic sensors 351 and 352 may be arranged above and below one side region of the touch pad region 116. The plurality of haptic sensors 353 and 354 may be arranged above and below another side region of the touch pad region 116.

In this regard, the processor 180 may be configured to detect a user input on the keyboard region 114 or the touch pad region 116 and provide light emission control and haptic feedback. The processor 180 may control the lighting lens portion 320 to emit light according to a user input on the keyboard region 114 or the touch pad region 116 and/or a state of an application program.

Referring to FIGS. 5 to 7, when the touch pad region 116 is pressed, the processor 180 may detect a touched region and pressure applied to the touched region through any one of the haptic sensors 350 arranged on the substrate 340. The haptic sensors 350 may be configured to include a first haptic sensor 351 to a fourth haptic sensor 354 that are arranged on upper left, lower left, upper right, and lower right portions of the substrate 340. The number of haptic sensors 350 is not limited thereto and may vary depending on the application.

The processor 180 may control the haptic motor 360 arranged on the substrate 340 to vibrate the touched region. The processor 180 may control the light-emitting element 330 corresponding to the touched region to emit light to a specific region corresponding to the touched region. The touched region may be recognized as one of the upper, central, and lower regions of one side and another side of the substrate 340. Accordingly, the processor 180 may control the lighting lens portion 320, which is adjacent to the touched region, to emit light by determining which region of the upper, central, and lower regions of the one side and the another side of the touch pad region 116 has been touched.

With respect to the feature of controlling the light lens part 320 adjacent to the touched region to emit light, the light lens part 320 may have an opening area formed therein as illustrated in FIG. 3B. In this regard, FIG. 7 is a view of a structure of a lighting lens portion that may be divided into a plurality of regions and a structure in which the lighting lens portion and a substrate are coupled.

Referring to FIG. 7, the lighting lens portion 320 may be configured to include a first region 320a as a top region, a second region 320b as a bottom region, a third region 320c as one side region, and a fourth region 320d as another side region. The first region 320a of the lighting lens portion 320 may be coupled to an upper end portion of the touch pad region 116. The second region 320b of the lighting lens portion 320 may be coupled to a lower end portion of the touch pad region 116. The third region 320c of the lighting lens portion 320 may be coupled to one end portion of the touch pad region 116. The third region 320d of the lighting lens portion 320 may be coupled to another end portion of the touch pad region 116.

The first region 320a may be connected to the third region 320c and the fourth region 320d. The first region 320a may be integrally connected to the third region 320c and the fourth region 320d. The second region 320b may be connected to the third region 320c and the fourth region 320d. The second region 320b may be integrally connected to the third region 320c and the fourth region 320d.

Referring to FIGS. 3B, 5, and 7, an opening area OA may be formed in the lighting lens portion 320 to surround the substrate 340 on which the haptic sensors 350 are arranged. The substrate 340 may be configured to be fitted into the opening area OA of the lighting lens portion 320. The touch pad region 116 in which the substrate 340 is arranged may be configured to be fitted into the opening area OA of the lighting lens portion 320.

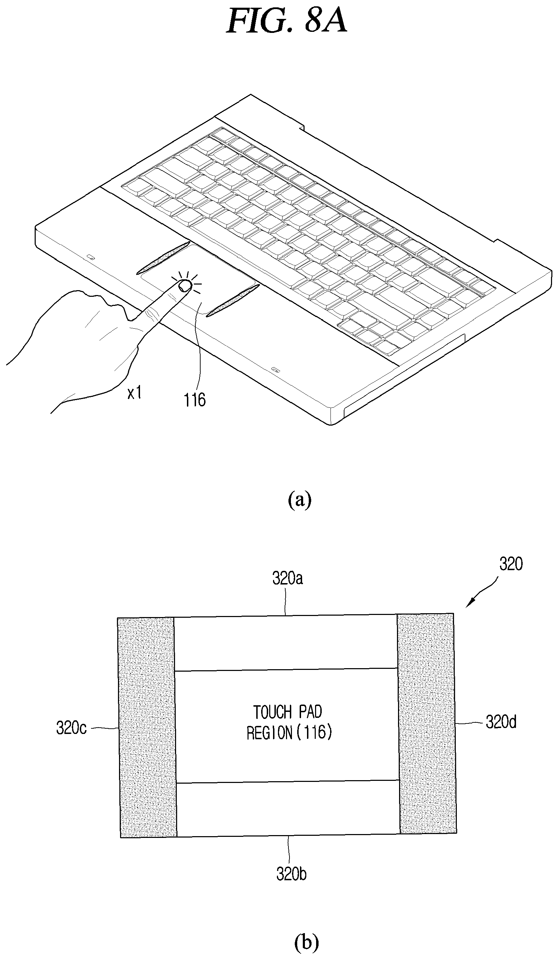

As described above, the lighting lens portion 320 may be configured to include the top region 320a, the bottom region 320b, the one side region 320c, and the another side region 320d. Based on user input applied to the electronic device, the processor may perform a control light emission on each region of the lighting lens portion 320. In this regard, FIGS. 8A to 8C are views of embodiments of controlling an emission region of a lighting lens portion based on a type of user input applied to an electronic device.

Referring to (a) of FIG. 8A, when a single touch input is applied to the touch pad region 116, an emission region may be displayed with a first color (or a first pattern). The single touch input may be defined as a touch input that is applied to the touch pad region 116 once. As the single touch input is applied, the one side region 320c and the another side region 320d of the lighting lens portion 320 may be displayed with light of a first color (or a first pattern) as illustrated in (b) of FIG. 8A.

Referring to FIGS. 5, 6, and 8A, the processor 180 may control light of a first color to be emitted through opposite sides of the touch pad region 116 when a single touch input is applied to the touch pad region 116. To this end, the light of the first color (or the first pattern) may be emitted through the one side region 320c and the another side region 320d of the lighting lens portion 320 corresponding to the opposite sides of the touch pad region 116.

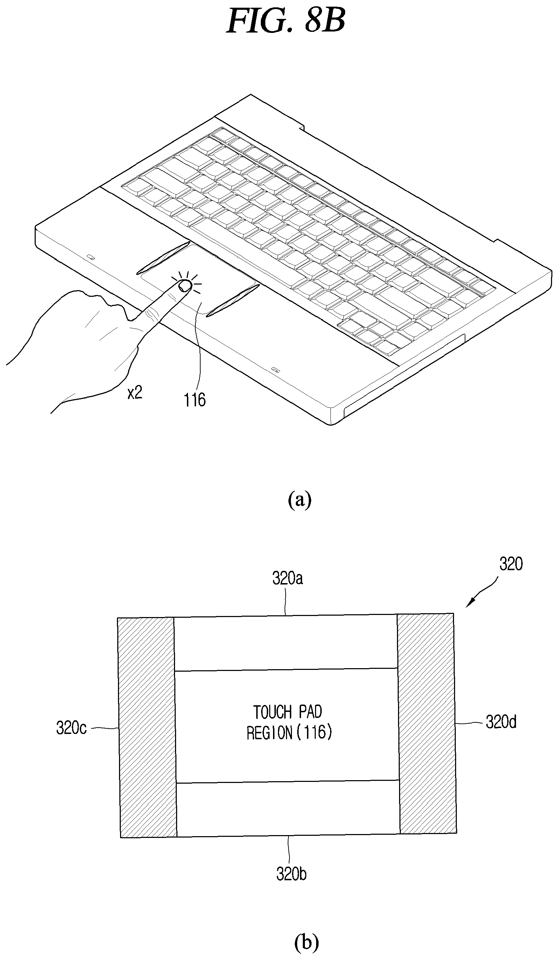

Referring to (a) of FIG. 8B, when a double touch input is applied to the touch pad region 116, an emission region may be displayed with a second color (or a second pattern). The double touch input may be defined as a touch input that is applied to the touch pad region 116 twice. As the double touch input is applied, an application program corresponding to an icon displayed on a screen may be executed, but is not limited thereto. As the double touch input is applied, the one side region 320c and the another side region 320d of the lighting lens portion 320 may be displayed with the light of the second color (or the second pattern) as illustrated in (b) of FIG. 8B.

The second pattern may be a different emission pattern from the first pattern, for example, may be a dot pattern, but is not limited thereto and may change depending on the application. In this regard, the second pattern may be formed such that at least one of an emission shape, color, or brightness which is an emission pattern of light is different.

Referring to FIGS. 5, 6, and 8B, the processor 180 may control the light of the second color (or the second pattern) to be emitted through the opposite sides of the touch pad region 116 when the double touch input is applied to the touch pad region 116. To this end, the light of the second color (or the second pattern) may be emitted through the one side region 320c and the another side region 320d of the lighting lens portion 320 corresponding to the opposite sides of the touch pad region 116.

In some embodiments, a method for controlling light emission according to a touch input according to the disclosure may be regarded as different inputs being applied by a mouse input device in response to different types of touch inputs applied to a touch pad region.

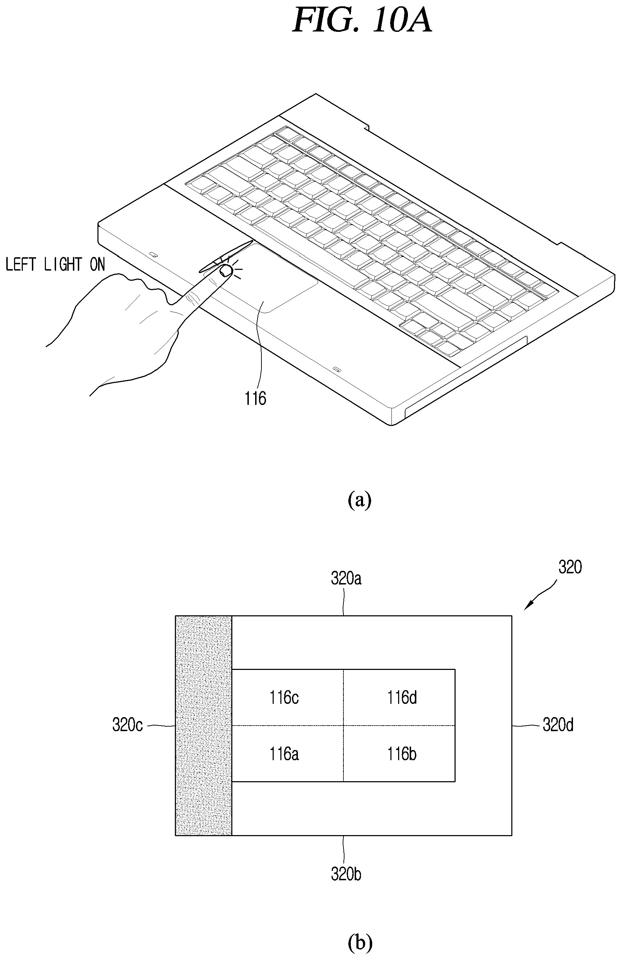

In this regard, when a first input, such as a single touch input, is applied, a left button of the mouse input device may be considered to have been clicked. The first input corresponding to the left button of the mouse input device may be any one of a single touch input (single tap), a click input to the left button on a top or bottom of the touch pad region 116, or a click input to a primary zone. The primary zone of the touch pad region 116 may include a lower left region 116a, an upper left region 116c, and an upper right region 116d as illustrated in FIG. 10A. The primary zone of the touch pad region 116 may include a partial region of the lower right region 116b, which is spaced apart from the lighting lens portion 320.

When a second input, such as a double-tap input, is applied, a right button of the mouse input device may be considered to have been clicked. The second input corresponding to the right button of the mouse input device may be any one of a double touch input (double tap), a click input to a right button on the top or bottom of the touch pad region 116, or a click input to a secondary zone. The secondary zone of the touch pad region 116 may be a partial region of the lower right region 116b adjacent to the lighting lens portion 320 illustrated in FIG. 10A.

Depending on whether the first input or the second input is applied, it may be considered that a different input is applied. In this regard, when a first input, such as a single touch input (single tap), is applied to the touch pad region 116, the left button of the mouse input device may be considered to have been clicked, causing a left LED to blink. When a second input, such as a double touch input (double tap), is applied to the touch pad region 116, the right button of the mouse input device may be considered to have been clicked, causing a right LED to blink.

When a first input, such as a single touch input (single tap), is applied to the touch pad region 116, the emission state of the one side region 320c (left region) of the touch pad region 116 may change. When a single tap input is applied to the touch pad region 116, an LED on the one side region 320c (left region) of the touch pad region 116 may blink. In this regard, the left button of the mouse input device may be considered to have been clicked, and an icon in a state where the left button of the mouse input device has been clicked may be selected or a screen transition may be performed according to an execution of an application.

When a second input, such as a double touch input (double tap), is applied to the touch pad region 116, the emission state of the another region 320d (right region) of the touch pad region 116 may change. When a double tap input is applied to the touch pad region 116, an LED on the another side region 320d (right region) of the touch pad region 116 may blink. In this regard, the right button of the mouse input device may be considered to have been clicked, and an icon in a state where the right button of the mouse input device has been clicked may be selected or a screen transition may be performed.

In some embodiments, the method for controlling the light emission according to the touch input according to the disclosure may be performed so as to switch an emission state to a blinking state in at least partial region. In this regard, depending on the type of touch input, at least a partial region of the lighting lens portion 320 in an emission state may be switched to a blinking state.

Referring to FIG. 8A, when a single touch input is applied to the touch pad region 116 while the light of the first color (or the first pattern) is emitted, the one side region 320c (the left region) of the lighting lens portion 320 may blink. Accordingly, as the single touch input is applied, the light-emitting element in the one side region 320c (the left region) of the lighting lens portion 320 may be turned off.

Referring to FIG. 8B, when a double touch input is applied to the touch pad region 116 while the light of the second color (or the second pattern) is emitted, the another side region 320d (the right region) of the lighting lens portion 320 may blink. Accordingly, as a double touch input is applied, the light-emitting element in the another side region 320d (the right region) of the lighting lens portion 320 may be turned off.

Accordingly, when a single touch input is applied to the touch pad region 116 while light is emitted through the opposite sides of the touch pad region 116, one side of the touch pad region 116 may blink. In some embodiments, when a double touch input is applied to the touch pad region 116 while light is emitted through the opposite sides of the touch pad region 116, another side of the touch pad region 116 may blink. In this regard, when a difference between a first time of a first touch input and a second time of a second touch input is greater than a threshold value, the first touch input and the second touch input may be regarded as individual single touch inputs. In another example, when the difference between the first time of the first touch input and the second time of the second touch input is smaller than the threshold value, the first touch input and the second touch input may be regarded as a double touch input.

When the second touch input is not applied until a time of the threshold value after the first touch input is applied in the state where light of a specific color (or pattern) is emitted, the first touch input may be considered as a single touch input. Accordingly, when the first touch input is applied to the touch pad region 116, the one side region 320c (the left region) of the lighting lens portion 320 may blink. Afterwards, when the second touch input is applied after the time of the threshold value has elapsed, the second touch input may be regarded as another touch input. Accordingly, when the second touch input is applied to the touch pad region 116, light may be emitted through the one side region 320c (the left region) of the lighting lens portion 320.

When the difference between the first time of the first touch input and the second time of the second touch input is smaller than the threshold value while light of a specific color (or pattern) is emitted, the another side region 320d of the light lens part 320 may blink and only the one side region 320c may be lighted up.

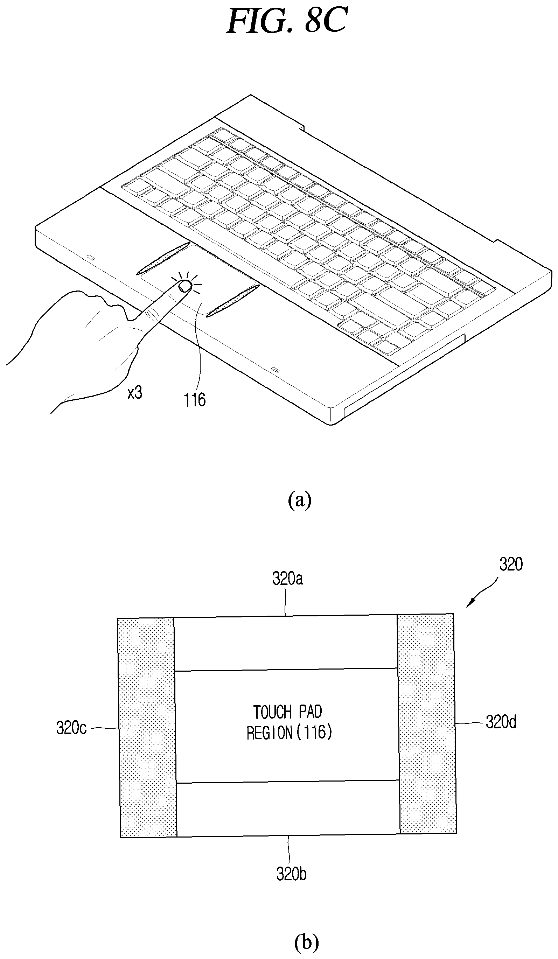

Referring to (a) of FIG. 8C, when a triple touch input is applied to the touch pad region 116, an emission region may be displayed with a third color (or a third pattern). The triple touch input may be defined as a touch input that is applied three times to the touch pad region 116. When the triple touch input is applied, the one side region 320c and the another side region 320d of the light lens part 320 may be displayed with light of a third color (or a third pattern) as illustrated in (b) of FIG. 8C.

The first to third patterns of light emitted through the touch pad region 116 may be configured such that at least one of emission shape, color, or brightness is different.

Referring to FIGS. 5, 6, and 8C, the processor 180 may control light of a third color (or a third pattern) to be emitted through the opposite sides of the touch pad region 116 when a triple touch input is applied to the touch pad region 116. To this end, the light of the third color (or the third pattern) may be emitted through the one side region 320c and the another side region 320d of the lighting lens portion 320 corresponding to the opposite sides of the touch pad region 116.

Referring to FIGS. 5, 6, and 8A to 8C, the processor 180 may detect that any one of a single touch input, a double touch input, or a triple touch input is input to the touch pad region 116. The processor 180 may control light of a first color, light of a second color, or light of a third color to be emitted through the opposite sides of the touch pad region 116 when the single touch input, the double touch input, or the triple touch input is input to the touch pad region 116.

With respect to the emission control according to the specification, the emission control for the touch pad region 116 is not limited to the one side region 320c and/or the another side region 320d. The emission control for the touch pad region 116 may be performed for the top region 320a and/or the bottom region 320b. In some embodiments, it is necessary to allow a user to more intuitively recognize a left boundary and a right boundary of the touch pad region 116 than an upper boundary and a lower boundary of the touch pad region 116, such that a user input is not applied outside the opposite side boundaries. Therefore, the emission control for the touch pad region 116 according to the disclosure may enable the user to intuitively recognize a touchable region even in a structure where the touch pad region 116 and an external region where touch is not recognized are not distinguished by a step or the like.

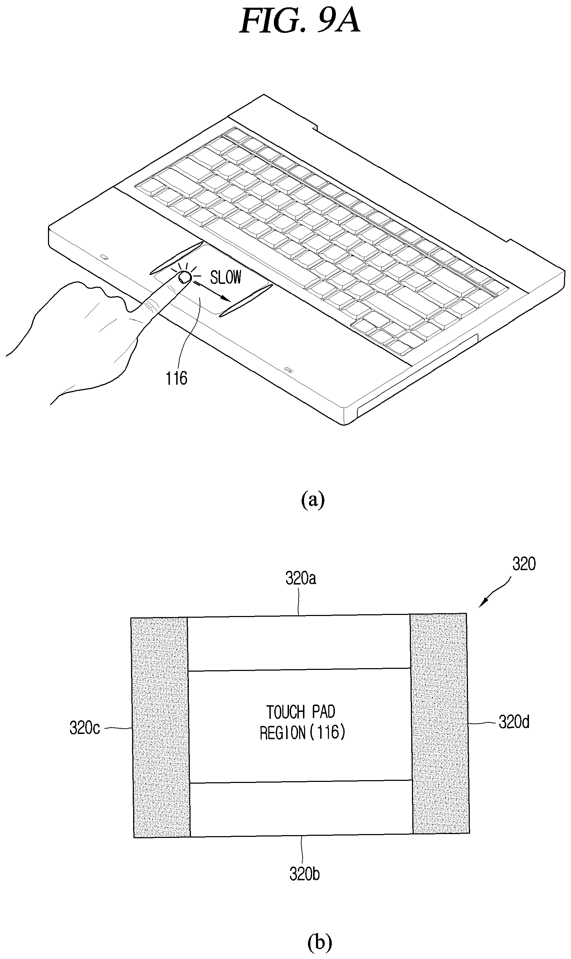

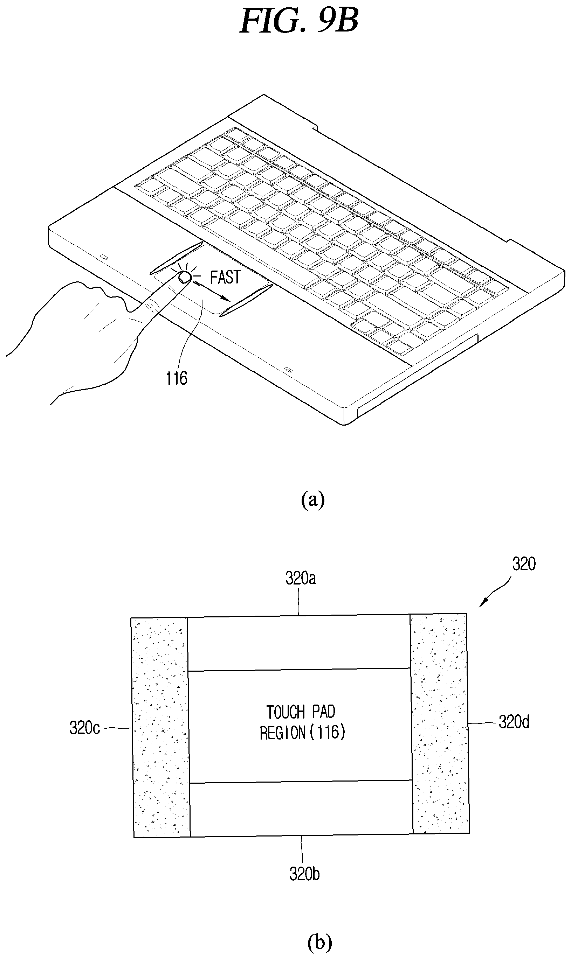

In some embodiments, the emission control for the touch pad region may also be performed by detecting movement of a touch input applied to the touch pad region. In this regard, FIGS. 9A and 9B are views of embodiments of controlling brightness of an emission region by detecting movement of a user input applied to an electronic device.

Referring to (a) of FIG. 9A, when a drag input is applied to the touch pad region 116 and a moving speed of the drag input is below a threshold speed, an emission control may be performed so that an emission region is slowly brightened. Referring to (b) of FIG. 9A, when a drag input is applied to the touch pad region 116 and a moving speed of the drag input is below the threshold speed, a speed of changing brightness of light in the one side region 320c and the another side region 320d of the lighting lens portion 320 may be adjusted to a first speed.

Referring to FIGS. 5, 6, and 9A, when a drag input is applied to the touch pad region 116 and a moving speed of the drag input is below the threshold speed, the processor 180 may change the brightness of light at a speed of a first slope per unit time. In this regard, the brightness of the one side region 320c and the another side region 320d of the lighting lens portion 320 corresponding to the opposite sides of the touch pad region 116 may be brightened at the speed of the first slope per unit time.

Referring to (a) of FIG. 9B, when a drag input is applied to the touch pad region 116 and a moving speed of the drag input exceeds the threshold speed, an emission control may be performed so that an emission region is quickly brightened. Referring to (b) of FIG. 9A, when a drag input is applied to the touch pad region 116 and a moving speed of the drag input is below the threshold speed, the speed of changing the brightness of light in the one side region 320c and the another side region 320d of the lighting lens portion 320 may be adjusted to a second speed faster than the first speed.

Referring to FIGS. 5, 6, and 9B, when a moving speed of the drag input exceeds the threshold speed, the processor 180 may change the speed of changing the brightness of light into a speed of a second slope greater than the first slope per unit time. In this regard, the brightness of the one side region 320c and the another side region 320d of the lighting lens portion 320 corresponding to the opposite sides of the touch pad region 116 may be brightened at the speed of the second slope per unit time.

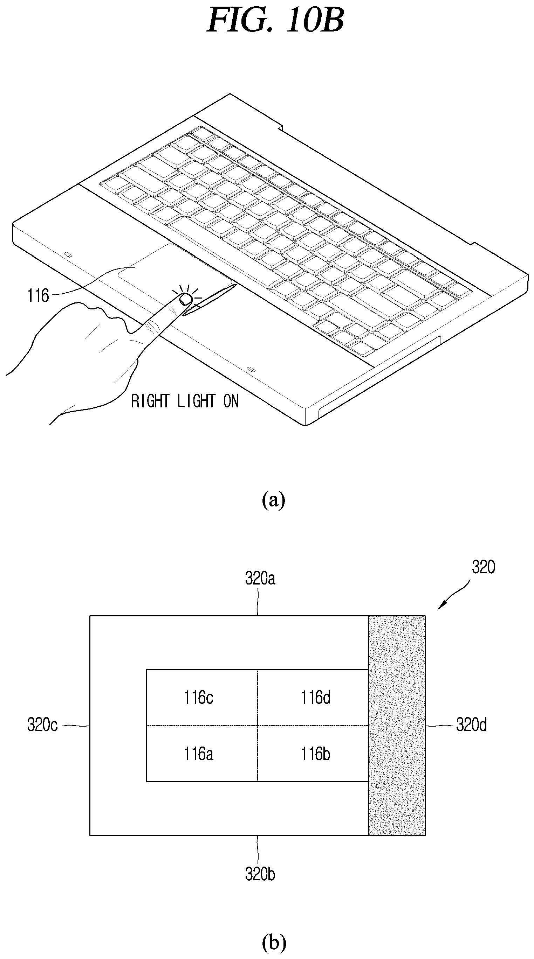

In some embodiments, the emission control for the touch pad region may also be performed by detecting coordinates of a user input applied to the touch pad region. In this regard, the touch pad region may be controlled such that light is emitted through only one side of the touch pad region by detecting a detection point of a user input. In this regard, FIGS. 10A and 10B are views of embodiments of controlling light to be emitted through a left side or right side of a touch pad region depending on a point at which a user input is detected in the touch pad region.

(a) of FIG. 10A illustrates a configuration in which light is emitted through only one side region of the touch pad region 116 when a user input is detected adjacent to the one side region of the touch pad region 116. (b) of FIG. 10A illustrates an emission pattern which is emitted through only the one side region 320c of the lighting lens portion 320 formed to correspond to the one side region of the touch pad region 116.

Referring to FIG. 10A, when a detection point of a user input on the touch pad region 116 approaches the left side 320c, which is the one side region of the touch pad region 116, by a first threshold distance or less, light may be emitted through only the left side 320c. In this regard, it may be set that light is emitted through the touch pad region 116 even though an initial touch input is applied to the touch pad region 116. After the initial touch input, when a drag input to the left side is applied and a drag input point approaches the left side 320c, light may be emitted through only the left side 320c. When the drag input more approaches the left side 320c in the state where light is emitted through only the left side 320c, the brightness of light may increase.

(a) of FIG. 10B illustrates a configuration in which light is emitted through only another side region of the touch pad region 116 when a user input is detected adjacent to the another side region of the touch pad region 116. (b) of FIG. 10B illustrates an emission pattern that light is emitted through only the another side region 320d of the lighting lens portion 320 formed to correspond to the another side region of the touch pad region 116.

Referring to FIG. 10B, when a detection point of a user input on the touch pad region 116 approaches the right side 320d, which is the another side region of the touch pad region 116, by a first threshold distance or less, light may be emitted through only the right side 320d. In this regard, it may be set that light is not emitted through the touch pad region 116 even when an initial touch input is applied to the touch pad region 116. After the initial touch input, when a drag input to the right side is applied and a drag input point approaches the right side 320d, light may be emitted through only the right side 320d. When the drag input more approaches the right side 320d in the state where light is emitted through only the right side 320d, the brightness of light may increase.

Referring to FIGS. 5, 6, 10A, and 10B, the processor 180 may detect whether a detection point of a drag input on the touch pad region 116 approaches the left side 320c or the right side 320d of the touch pad region 116 by a first threshold distance or less. When the detection point approaches the left side 320c or the right side 320d of the touch pad region 116 by the first threshold distance or less, the processor 180 may control light to be emitted through only the left side 320c or the right side 320d.

The processor 180 may increase the brightness of light as the detection point of the user input approaches the left side 320c or the right side 320d while light is emitted through only the left side 320c or the right side 320d. The processor 180 may decrease the brightness of light as the detection point of the user input is getting away from the left side 320c or the right side 320d while light is emitted through only the left side 320c or the right side 320d.

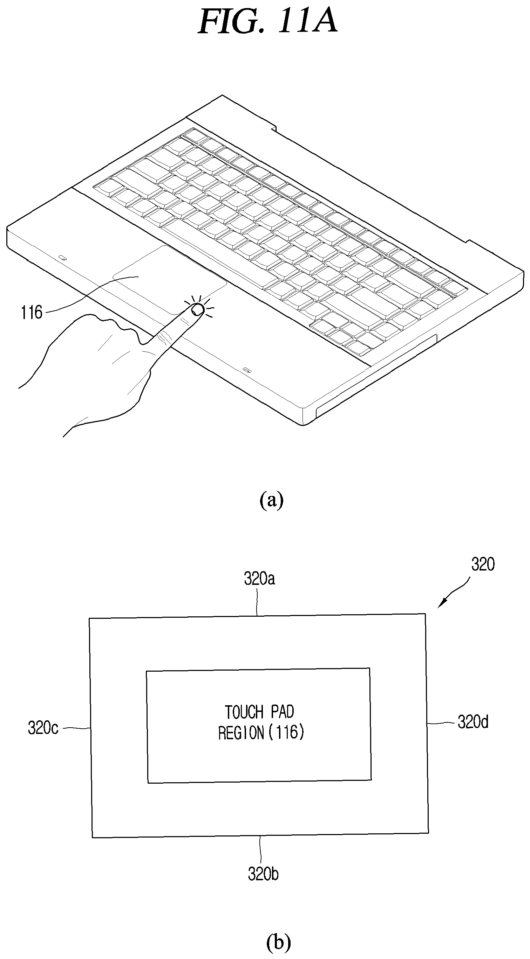

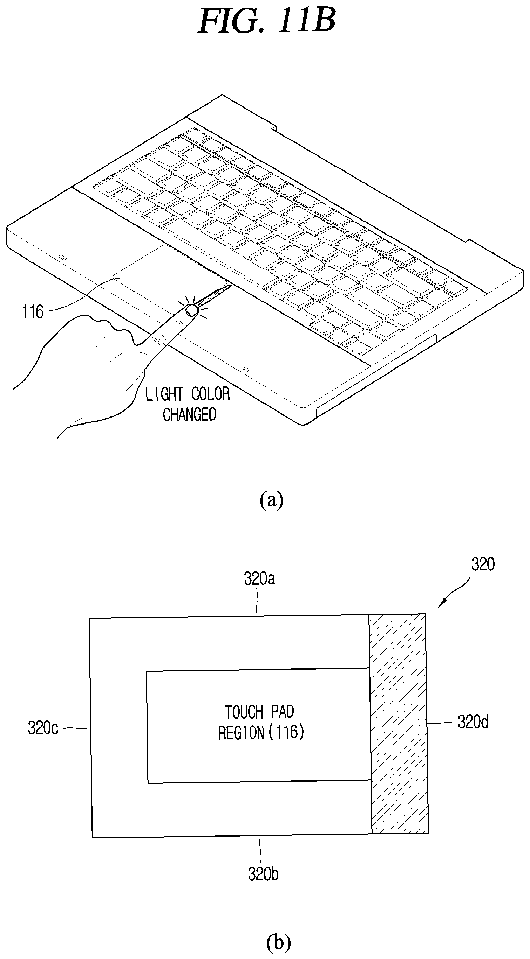

In some embodiments, an emission control may be performed to suppress a user input applied to the touch pad region from deviating from the touch pad region, thereby guiding a user input region. In this regard, FIGS. 11A and 11B are views of embodiments of blinking or changing a color of a boundary region of a touch pad region when a user input is detected in the boundary region of the touch pad region.

(a) of FIG. 11A illustrate a configuration in which a slit region of the touch pad region 116 where the emission control is performed blinks when a user input is detected adjacent to the boundary region of the touch pad region 116. (b) of FIG. 11A illustrates an emission pattern that the right side 320d of the lighting lens portion 320 formed to correspond to the boundary region of the touch pad region 116 blinks.

Referring to FIG. 11A, when a user input is detected on the right side 320d, which is the boundary region of the touch pad region 116, the right side 320d may blink. In this regard, when the detection point of the user input reaches the right side 320d or approaches the right side 320d by a second threshold distance or less, the right side 320d may blink. In some embodiments, the blinking control for the touch pad region 116 is not limited to the right side 320d of the touch pad region 116, but may be performed based on the left side 320c.

(a) of FIG. 11B illustrates a configuration in which the slit region of the touch pad region 116, for which the emission control is performed, changes in color when a user input is detected adjacent to the boundary region of the touch pad region 116. (b) of FIG. 11B illustrates an emission pattern that the right side 320d of the lighting lens portion 320 formed to correspond to the boundary region of the touch pad region 116 changes in color (or pattern).

Referring to FIG. 11B, when a user input is detected on the right side 320d, which is the boundary region of the touch pad region 116, the color (or pattern) of light emitted through the right side 320d may change. In this regard, when the detection point of the user input reaches the right side 320d or approaches the right side 320d by the second threshold distance or less, the color (or pattern) of light emitted through the right side 320d may change. In some embodiments, the change of the emission color/pattern of the touch pad region 116 is not limited to the right side 320d of the touch pad region 116, but may be performed based on the left side 320c.

Referring to FIGS. 5, 6, 11A, and 11B, the processor 180 may perform the change of emission color/pattern or blinking when the detection point of the user input reaches the boundary region or approaches the boundary region by the second threshold distance or less. The processor 180 may detect whether the detection point of the drag input reaches the left side 320c or the right side 320d or approaches by the second threshold distance or less while light is emitted through only the left side 320c or the right side 320d. In this regard, the second threshold distance may be set to be shorter than the first threshold distance which is set for light to be emitted through only the left side 320c or the right side 320d. When the detection point of the drag input reaches the left side 320c or the right side 320d or approaches by the second threshold distance or less, the processor 180 may control light to change in color or to blink.

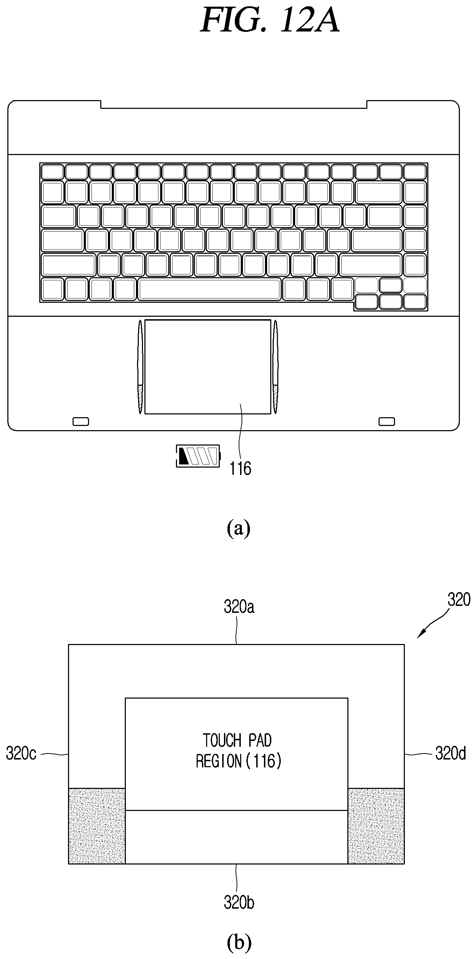

In some embodiments, it may be configured to perform emission control for a touch pad region by detecting a status of an electronic device. In this regard, FIGS. 12A to 12C are views of embodiments of controlling light emission for a touch pad region according to a remaining battery capacity of an electronic device.

(a) of FIG. 12A illustrates a structure in which, when a remaining battery capacity is at a first level, light is emitted through the opposite side regions of the touch pad region 116 by a first height in proportion to the first level. (b) of FIG. 12A illustrates an emission pattern that light is emitted by the first height through the left side 320c and the right side 320d of the lighting lens portion 320 formed to correspond to the boundary regions of the touch pad region 116. Referring to FIG. 12A, when the remaining battery capacity is below a first threshold value, light may be emitted at the first height through the slit region of the left side 320c or the right side 320d of the touch pad region 116.

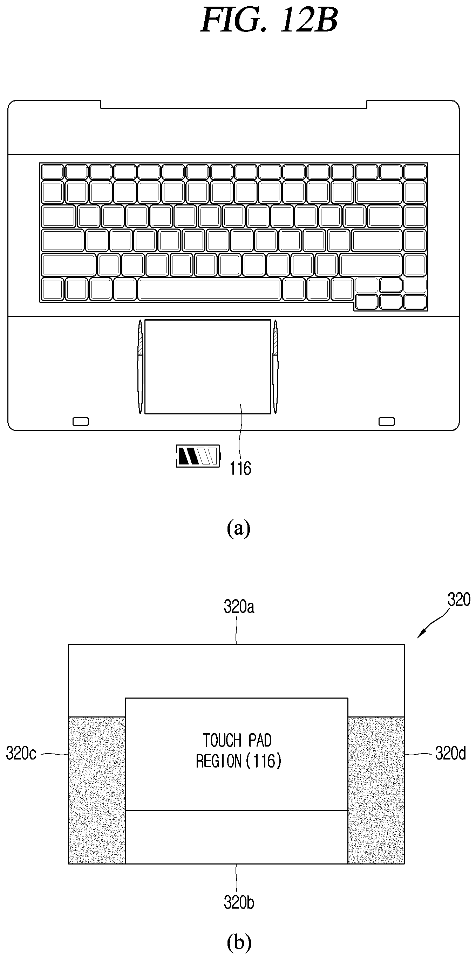

(b) of FIG. 12B illustrates a structure in which, when a remaining battery capacity is at a second level, light is emitted through the opposite side regions of the touch pad region 116 by a second height in proportion to the second level. (b) of FIG. 12B illustrates an emission pattern that light is emitted by the second height through the left side 320c and the right side 320d of the lighting lens portion 320 formed to correspond to the boundary regions of the touch pad region 116. Referring to FIG. 12B, when the remaining battery capacity is at least the first threshold value and a second threshold value or less, light may be emitted at the second height through the slit region of the left side 320c or the right side 320d of the touch pad region 116.

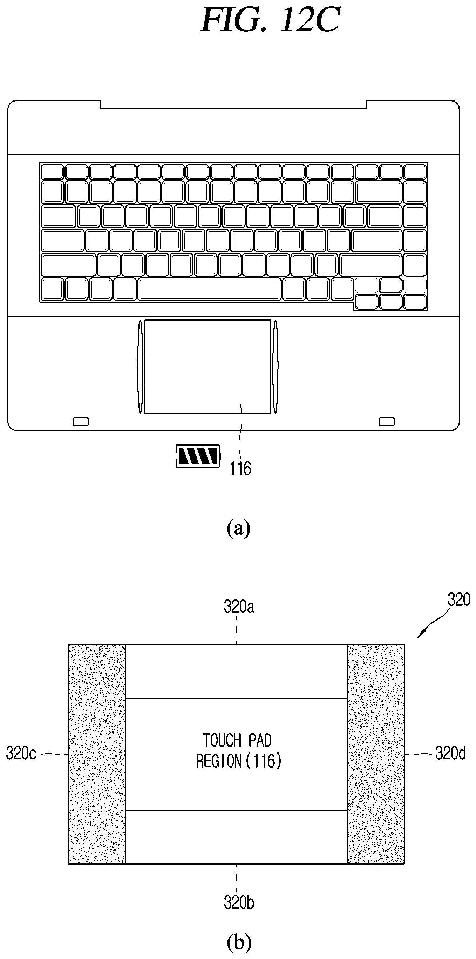

(c) of FIG. 12C illustrates a structure in which, when a remaining battery capacity is at a third level, light is emitted through the opposite side regions of the touch pad region 116 by a third height in proportion to the third level. (b) of FIG. 12B illustrates an emission pattern that light is emitted by the third height through the left side 320c and the right side 320d of the lighting lens portion 320 formed to correspond to the boundary regions of the touch pad region 116. Referring to FIG. 12C, when the remaining battery capacity is at least a third threshold value, light may be emitted at the third height through the slit region of the left side 320c or the right side 320d of the touch pad region 116.

Referring to FIGS. 5, 6, and 12A to 12C, the processor 180 may detect a remaining battery capacity of the electronic device and perform emission region control according to the remaining battery capacity. When the remaining battery capacity is below the first threshold value, the processor 180 may control light to be emitted at the first height through the slit region of the left side 320c or the right side 320d of the touch pad region 116. When the remaining battery capacity is below the second threshold value, the processor 180 may control light to be emitted at the second height through the slit region. When the remaining battery capacity is at least the third threshold value, the processor 180 may control light to be emitted at the third height through the slit region. In this regard, the second threshold value may be set to be greater than the first threshold value, and the third threshold value may be set to be greater than the second threshold value. The third threshold value may be set to a battery capacity at which the battery is fully charged, but is not limited thereto and may be set to any value greater than the second threshold value.

The emission region control according to the remaining battery capacity may be performed by controlling the plurality of light-emitting elements 331 to 336 of FIG. 5. Referring to FIGS. 5, 6, and 12A to 12C, when the remaining battery capacity is the first threshold value or less, the processor 180 may control the second and fifth light-emitting elements 332 and 335 at the bottom to emit light. When the remaining battery capacity is at least the first threshold value and the second threshold or less, the processor 180 may control the second and fifth light-emitting elements 332 and 335 at the bottom and the third and sixth light-emitting elements 333 and 336 at the center to emit light. When the remaining battery capacity is at least the third threshold value, the processor 180 may control the first to sixth light-emitting elements 331 to 336 to all emit light.

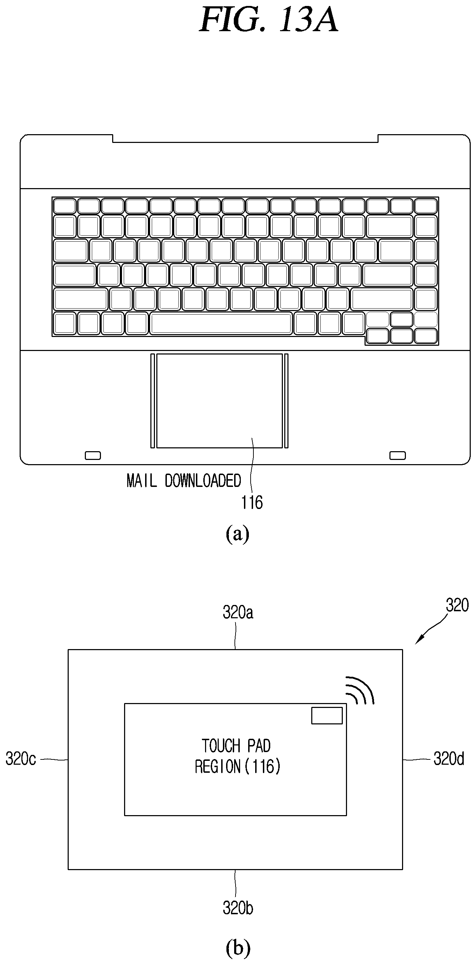

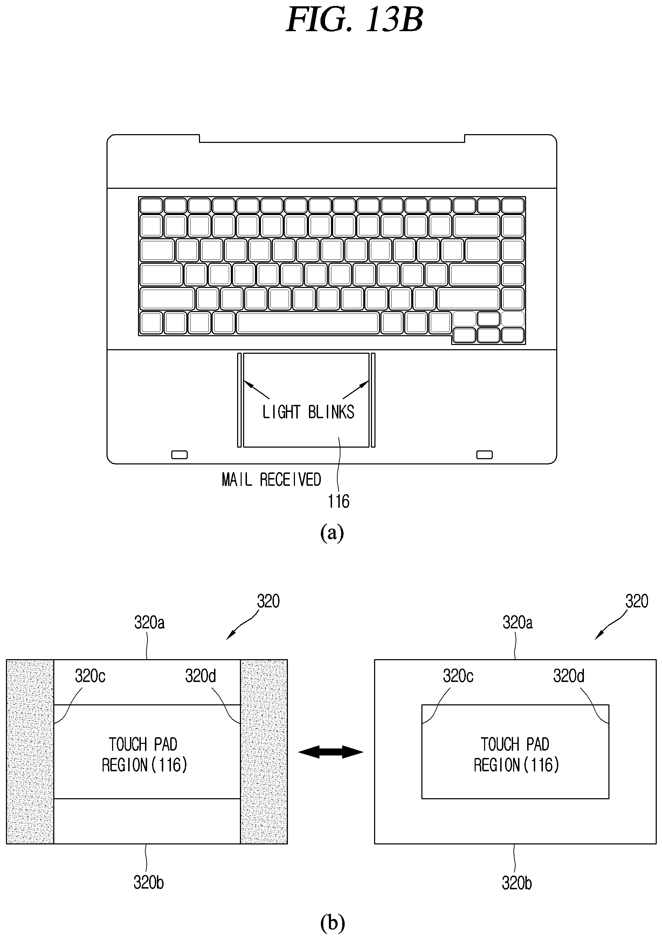

In some embodiments, it may be configured to perform emission control for a touch pad region by detecting an event received or occurred in an electronic device. In this regard, FIGS. 13A and 13B are views of embodiments of controlling light emission for a touch pad region according to an event occurrence.

(a) of FIG. 13A illustrates a structure in which an icon is displayed in a region adjacent to the inside of the slit region, which is the boundary region of the touch pad region 116, according to a first event that a file download is completed. (b) of FIG. 13A illustrates a user interface that an icon is displayed in a region adjacent to the inside of the slit region of the left side 320c or the right side 320d of the touch pad region 116.

Referring to FIG. 13A, when the first event that the file download is completed is detected, an icon may be displayed in a region adjacent to the inside of the slit region of the left side 320c or right side 320d of the touch pad region 116.

(a) of FIG. 13B illustrates a structure in which the boundary region of the touch pad region 116 is blink-controlled to emit light and blink in a repeating manner according to a second event that a new email is received. (b) of FIG. 13B illustrates an emission pattern in which light emission and blinking are repeatedly performed in the slit region of the left side 320c or the right side 320d.

Referring to FIG. 13B, when the second event that the new email is received is detected, the light emission and blinking may be repeatedly performed in the slit region of the left side 320c or the right side 320d of the touch pad region 116 to notify the user of the detection of the second event. The blink-type emission control may be performed in which the light emission and blinking are repeatedly performed in the slit region of the left side 320c or the right side 320d of the touch pad region 116.

Referring to FIGS. 5, 6, 13A, and 13B, the processor 180 may detect whether the first event of the file download completion, the second event of the new email reception, or a third event of a preset pattern has occurred. When at least one of the first to third events is detected, the processor 180 may control light to be repeatedly emitted or blink through the slit region of the left side 320c or the right side 320d of the touch pad region 116. When at least one of the first to third events is detected, the processor 180 may control an icon to be displayed in a region adjacent to the inside of the slit region of the left side 320c or the right side 320d of the touch pad region 116.

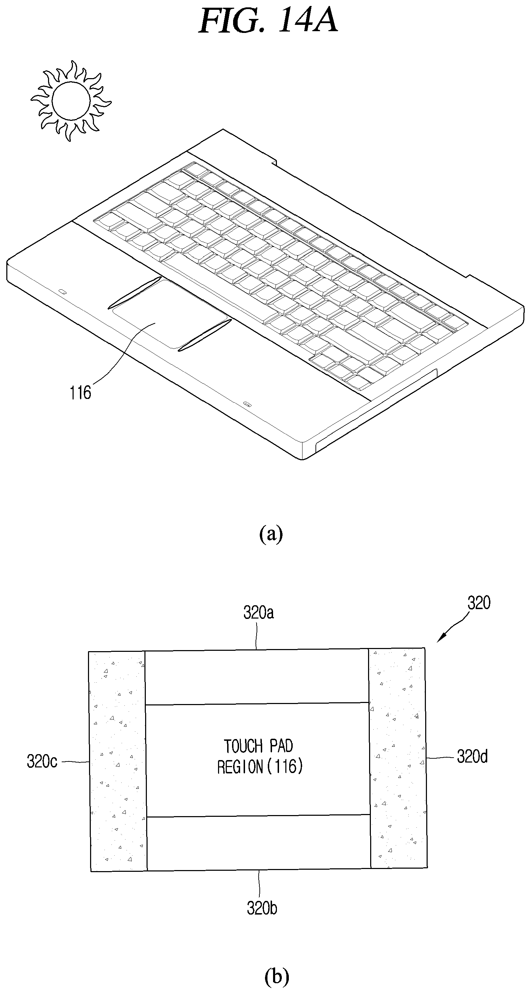

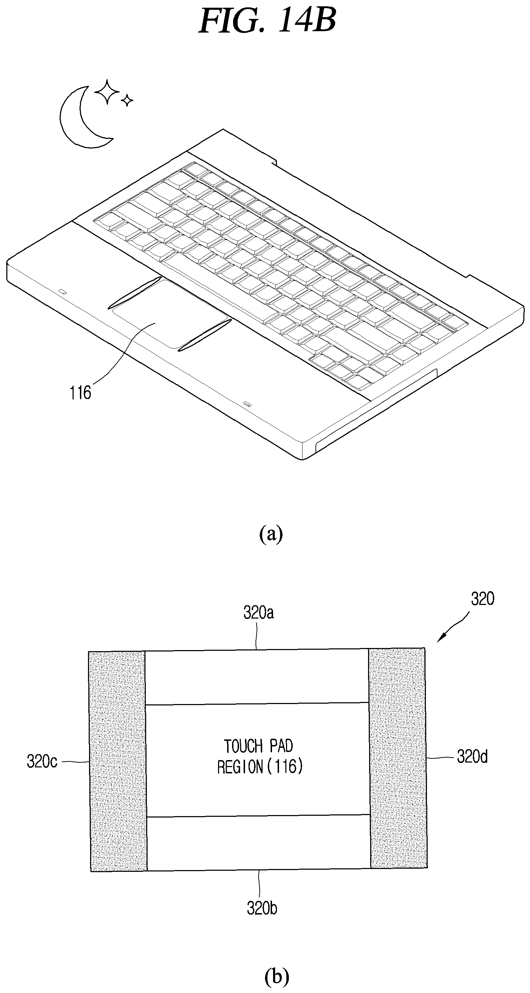

In some embodiments, the emission control for the touch pad region may be performed according to brightness of a surrounding region in which an electronic device is being used. In this regard, FIGS. 14A and 14B are views of embodiments of controlling light emission for a touch pad region according to brightness of a surrounding region in which an electronic device is being used.

(a) of FIG. 14A illustrates a structure in which light emission is controlled so that the slit region of the touch pad region 116 becomes bright in a bright environment, such as a natural light environment. (b) of FIG. 14A illustrates an emission pattern that the brightness of the slit region of the left side 320c or the right side 320d of the touch pad region 116 increases.

Referring to FIG. 14A, the slit region of the touch pad region 116 may be controlled to be bright in a bright environment, such as a natural light environment. In some embodiments, when an ambient brightness value is greater than or equal to a first threshold value, the brightness of the slit region of the left side 320c or the right side 320d of the touch pad region 116 may increase.

(b) of FIG. 14A illustrates a structure in which the slit region of the touch pad region 116 is controlled to be dark in a dark environment, compared to a bright environment. (b) of FIG. 14A illustrates an emission pattern that the brightness of the slit region of the left side 320c or the right side 320d of the touch pad region 116 decreases.

Referring to FIG. 14B, the slit region of the touch pad region 116 may be controlled to be darker in the dark environment than that in the bright environment, to suppress glare and save power in the dark environment. When an ambient brightness value is smaller than or equal to a second threshold value which is smaller than the first threshold value, the brightness of the slit region of the left side 320c or the right side 320d of the touch pad region 116 may decrease.

Referring to FIGS. 5, 6, 14A, and 14B, the processor 180 may detect ambient brightness information based on at least one of a camera, a light sensor, or a current time. The processor 180 may control the brightness of the slit region of the left side 320c or the right side 320d of the touch pad region 116 based on the ambient brightness information.

Hereinafter, the structure of the electronic device 100 having the keyboard according to the disclosure will be described with reference to FIGS. 1A to 14B. The electronic device 100 may be configured to include a display 204 and a base portion 104. The display 204 may be configured to display screen information. The base portion 104 may be operably coupled to the display 204. The base portion 104 may be configured to have the keyboard region 114 and may be configured to detect a touch input.

The base portion 104 configured to detect a touch input may include a touch pad region 116 and a lighting lens portion 320. The touch pad region 116 may be arranged in the lower region of the glass 310 and configured to detect a touch input. The touch pad region 116 may include at least one light source 321 to 326. The lighting lens portion 320 may be formed along opposite sides of the touch pad region 116.

When a touch input is detected on the touch pad region 116, light may be emitted through at least one side of the touch pad region 116. In this regard, the processor 180 may control light to be emitted through at least one of the left side 320c or the right side 320d of the touch pad region 116. The processor 180 may control the color, brightness, or emission region of light emitted according to an input pattern of a touch input.

The base portion 104 may further include glass 310, a transparent layer 311, and an opaque layer 312. The glass 310 may be arranged in the top region of the touch input region 116 and may be configured to emit light through a specific region 310R. The transparent layer 311 may be arranged below the glass 310. The transparent layer 311 may be formed to transmit light from a light source. The opaque layer 312 may be arranged below the transparent layer 311. The opaque layer 312 may be formed in a partial region to cut light from the light source. Light from the light source may be emitted from the left side 320c and the right side 320d of the touch pad region 116 through the transparent layer 311 which corresponds to a slot region 312s of the opaque layer 312.

The light source may include a plurality of light-emitting elements 331 to 336 arranged as a plurality of light-emitting elements on each of a left side 320c and a right side 320d of the touch pad region 116. The light-emitting elements 331 to 336 may be arranged in one axial direction of a substrate 340 which is arranged in the touch pad region 116.

The lighting lens portion 320 may be configured to include a first part 321 and a second part 322. The lighting lens portion 320 may be configured to include a first part 321 through a third part 323. The first part 321 may be formed with a first thickness in the bottom region of the light-emitting element 330. The second part 322 may have a second thickness t2 which is thicker than the first thickness t1 at an end portion of the first part 321. The second part 322 may be configured to allow light emitted from the light-emitting element 330 to pass therethrough.

The third part 323 may have a third thickness which is thicker than the second thickness at an end portion of the second part 322. The third part 323 may be configured so that light emitted from the light-emitting element 330 is emitted through the specific region 310R. The inner surface of the third part 323 may be spaced apart to oppose a side surface of the substrate 340.

In some embodiments, the touch pad region of the electronic device may be configured to detect pressure of user input. In this regard, in a certain application program, the touch pad region 116 of the electronic device may be configured to detect pressure of user input. To this end, when the touch pad region 116 is pressed, the processor 180 may detect a touched region and pressure applied to the touched region through any one of haptic sensors 351 to 354 arranged on the substrate 240. The processor 180 may control a haptic motor 360 arranged on the substrate 340 to vibrate the touched region.

In some embodiments, the electronic device including the keyboard may perform emission control for a touch pad region in conjunction with an emission pattern and/or function keys of the keyboard. Referring to FIG. 1B, the display 102 and the base portion 104 may be configured to be integrally coupled to each other or to be physically separated. A backlight 114 may be arranged below the keyboard region 114 of the base portion 104.

Referring to FIGS. 1A to 6, the processor 180 may be operably coupled to the backlight 114b arranged below the keyboard region 114. The processor 180 may operate in conjunction with the backlight 114b of the keyboard region 114. The processor 180 may operate in conjunction with a function key associated with brightness adjustment of the keyboard region 114. The processor 180 may control brightness and color of light emitted through at least one side of the touch pad region 116 in conjunction with the backlight 114b or with the function key associated with the brightness adjustment.

Depending on whether the electronic device is powered on or off, the processor 180 may control light to be emitted or blink through the left side 320c or right side 320d of the touch pad region 116 in conjunction with the backlight 114b of the keyboard region 114. The processor 180 may control the brightness of the left side 320c or the right side 320d of the touch pad region 116 based on brightness information detected according to an input applied to a function key of the keyboard region 114. The processor 180 may control the color and emission pattern of the left side 320c or the right side 320d of the touch pad region 116 based on color information or pattern information detected according to an input applied to a function key of the keyboard region 114.

In some embodiments, the electronic device including the keyboard may be controlled to deactivate touch pad recognition while a user is performing input using a keyboard. In this regard, referring to FIGS. 1A to 6, the processor 180 may detect a keyboard input applied to the keyboard region 114 or a user motion input to the keyboard region 114. When a keyboard input or user motion is detected in the keyboard region 114, the processor 180 may control the touch pad region 116 so that no touch input is recognized. The processor 180 may deactivate a touch recognition chip arranged in the touch pad region 116 and/or a touch input module 121 having the same.

The electronic device including the keyboard may change the color of the touch pad region to help the user recognize a keyboard input while deactivating the touch pad region in case where the keyboard input is detected. When a keyboard input or user motion is detected in the keyboard region 114, the processor 180 may change the color of light emitted through the slit region of the left side 320c or right side 320d of the touch pad region 116 while deactivating the touch recognition chip.

In some embodiments, the electronic device having the touch pad region may be coupled with a separate input device that may operate in a wired or wireless manner. Referring to FIGS. 1A to 6, the base portion 104 in which the keyboard region 114 of the electronic device is formed may be formed integrally with the display 102 or may be operably coupled with the display 102 while being physically separated. The electronic device may be operably coupled in a wired or wireless manner with an input device, such as a mouse, separate from the keyboard region 114 and the touch pad region 116.

The processor 180 may detect connection or non-connection of an input device, through which a different touch input, separate from a touch input applied to the touch pad region 116, is applicable. When the input device is connected, the processor 180 may deactivate a touch recognition chip arranged in the touch pad region 116 and/or a touch input module 121 having the same.

The electronic device having the touch pad region may perform blink control or color/brightness control for an emission region when a separate input device is disconnected. Referring to FIGS. 1A to 6, the processor 180 may detect connection or non-connection of an input device, through which a different touch input, separate from a touch input applied to the touch pad region 116, is applicable. When an input device is connected or disconnected, the processor 180 may control light emission and blinking for the slit region of the left side 320c or the right side 320d of the touch pad region 116. When the input device is connected or disconnected, the processor 180 may change the color or brightness of light emitted through the slit region of the left side 320c or right side 320d of the touch pad region 116.

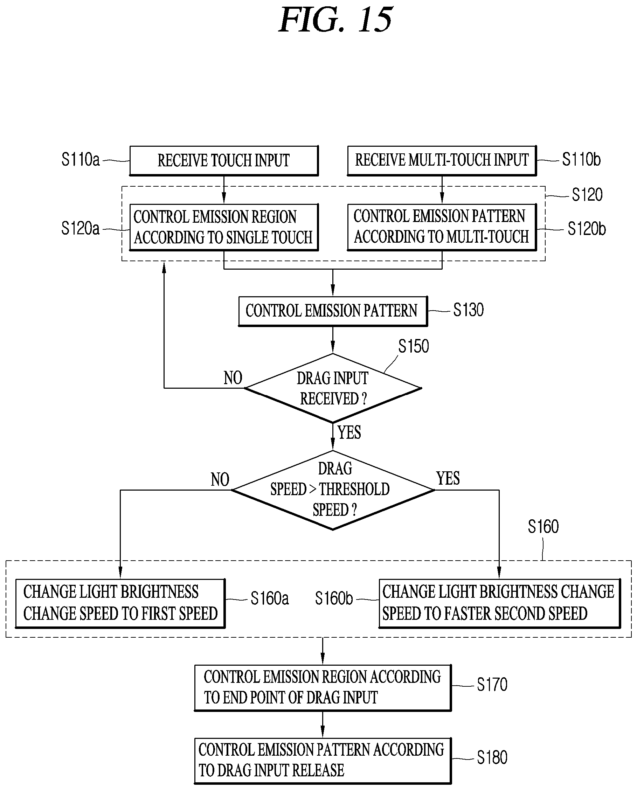

The foregoing description has been given of an electronic device having a keyboard according to one aspect of the disclosure. Hereinafter, a method for controlling an electronic device having a keyboard according to another aspect of the disclosure will be described. In this regard, FIG. 15 is a flowchart illustrating a method for controlling an electronic device having a haptic and touch pad active region to which an optical module is applied, according to the disclosure. Referring to FIG. 15, the control method may be configured to include a touch input reception process (S110a), a multi-touch input reception process (S110b), an emission region control process (S120), and an emission pattern control process (S130).

In the touch input receiving process (S110a), it may be detected which region among divided sub-regions of a touch pad region has received a touch input. In this regard, as illustrated in FIGS. 10A and 10B, it may be detected to which region a touch input has been applied, of a left region and a bottom region of the touch pad region 116. The determination regarding the left and bottom regions of the touch pad region 116 may correspond to determining which region an applied touch input is adjacent to, of one side region 320c and another side region 320d of the lighting lens portion 320. In some embodiments, as illustrated in FIGS. 10A and 10B, it may be detected to which region a touch input has been applied, among a lower left region 116a, a lower right region 116b, an upper right region 116c, and an upper left region 116d of the touch pad region 116.

In the multi-touch input reception process (S110b), it may be detected whether a multi-touch input has been received in the touch pad region. Unlike a single touch input, an application program may be executed based on the multi-touch input. The emission region control process (S120) may include an emission region control process (S120a) according to a single touch input and an emission region control process (S120b) according to a multi-touch input.

In the emission region control process (S120a), when a touch input is applied to a region based on one axial center line and another axial center line of the touch pad region, a region of the lighting lens portion corresponding to the region may be controlled to emit light. For example, when a touch input is applied to the lower left region 116a or the upper left region 116c of the touch pad region 116 as illustrated in FIG. 10A, light may be emitted through one side region 320c of the lighting lens portion 320. In some embodiments, when a touch input is applied to the lower right region 116b or the upper right region 116d of the touch pad region 116 as illustrated in FIG. 10B, light may be emitted through the bottom region 320b and the another side region 320d of the lighting lens portion 320.

When a multi-touch input or triple-touch input is applied to the touch pad region (S110b), light may be emitted through a specific region corresponding to a region, to which the multi-touch input or triple-touch input has been applied, of the lighting lens portion in the emission region control process (S120b). The emission pattern control process (S130) may be performed until the application program is executed by the multi-touch input and an initial screen is displayed. In the emission pattern control process (S130), the lighting lens portion may be controlled to emit light of a second color or a third color that is different from a first color. In the emission pattern control process (S130), the lighting lens portion may be controlled to emit light of a second pattern or a third pattern that is different from a first pattern.

Referring to FIG. 15, the control method may include a drag input determination process (S150), a drag speed determination process (S155), and a light brightness control process (S160).

In the drag input determination process (S150), it may be determined whether a drag input has been applied in a certain direction after a touch input was applied. When a drag input is not applied and a touch input is applied, the processes subsequent to the emission region control process (S120) may be performed.

When a drag input is applied, whether a drag speed is a threshold speed or less may be determined in the drag speed determination process (S155). When the drag speed is slower than the threshold speed, a first brightness control process (S160a) may be performed. In the first brightness control process (S160a), a speed of changing the brightness of light of the one side region 320c and the another side region 320d of the lighting lens portion 320 may be adjusted to a first speed.

When the drag speed is faster than or equal to the threshold speed, a second brightness control process (S160b) may be performed. In the second brightness control process (S160b), a speed of changing the brightness of light of the one side region 320c and the another side region 320d of the lighting lens portion 320 may be adjusted to a second speed faster than the first speed.

In the emission region control process (S170), the emission region of the lighting lens portion may be controlled to change depending on an end point of the drag input. In this regard, in the emission region control process (S120), while light is emitted through a first region of the lighting lens portion according to a single touch input, light emission through a second region of the lighting lens portion may be controlled according to the end point of the drag input. The emission pattern control process (S180) may be performed for a certain period of time after the release of the drag input. In the emission pattern control process (S180), light may be controlled to be emitted in a different pattern through the emission region.

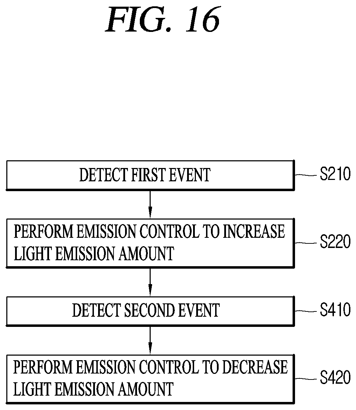

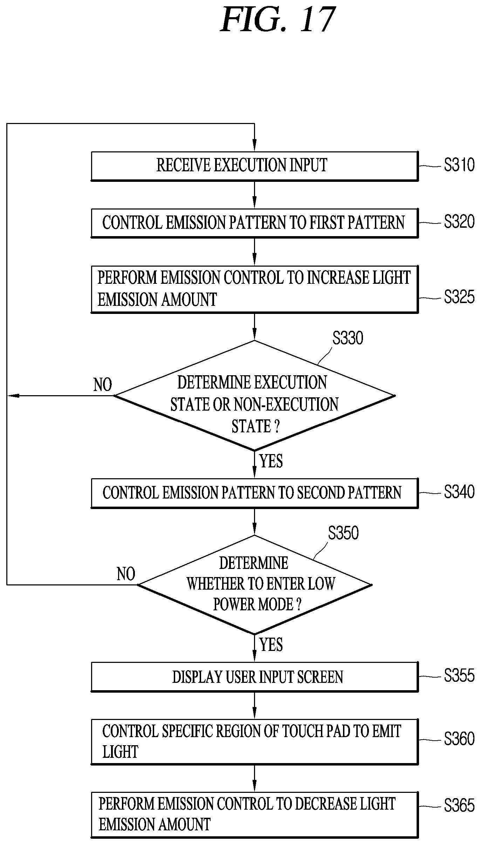

In some embodiments, an electronic device having a haptic and touch pad active region, to which an optical module is applied, according to the disclosure may perform emission control according to power on/off and an execution of an application program. In this regard, FIG. 16 is a flowchart illustrating a method for controlling an electronic device based on an event detection according to the disclosure. FIG. 17 is a flowchart illustrating a method for controlling an electronic device according to an execution input and execution status of an application program according to the disclosure.

Referring to FIG. 16, the control method may include a first event detection process (S210), a first emission control process (S220) for increasing an amount of light emission, a second event detection process (S410), and a second emission control process (S420) for decreasing an amount of light emission.

In the first event detection process (S210), it may be detected whether the first event that may increase the amount of light emission has occurred. The first event that may increase the amount of light emission may include various events described herein in addition to turning a power button on. A detection of a battery capacity in a fully charged state as illustrated in FIG. 12C, an event such as a mail reception as illustrated in FIG. 13A, or an ambient brightness value of at least a first threshold value as illustrated in FIG. 14A may be detected as the first event.

When the first event is detected in the first emission control process (S220), the amount of light emission in the touch pad region may be controlled to increase for a certain period of time.

In the second event detection process (S410), it may be detected whether the second event that may decrease the amount of light emission has occurred. The second event that may decrease the amount of light emission may include various events described herein in addition to turning a power button off. A detection of a battery capacity of a threshold level or less as illustrated in FIG. 12A, a user confirmation input after detection of an event such as a mail reception as illustrated in FIG. 13A, or an ambient brightness value of a second threshold value or less as illustrated in FIG. 14B may be detected as the second event.

When the second event is detected in the second emission control process (S220), the amount of light emission in the touch pad region may be controlled to decrease for a certain period of time. For example, when a power-off input for turning a system off is applied on a screen, the amount of light emission in the touch pad region may be controlled to decrease until power is actually turned off in the second emission control process (S420).

Referring to FIG. 17, the control method may include an execution input reception process (S310), a first emission pattern control process (S320), a first emission control process (S325), an execution status determination process (S330), and a second emission pattern control process (S340). The control method may perform emission control by determining whether to enter a low power mode. The control method may include a low power mode entry determination process (S350), a screen display process (S355), an emission region control process (S360), and a second emission control process (S365). In the first emission control process (S325), the light emission amount may be controlled to increase, and in the second emission control process (S365), the light emission amount may be controlled to decrease.

In the execution input reception process (S310), an execution input for an application program may be received. When the execution input for the application program is applied, light may be controlled to be emitted in a first pattern through a specific region in the first emission pattern control process (S320). In the first emission control process (S325), the light emission amount of the touch pad region may be controlled to increase from a first time point when the execution input for the application program is received to a second time point when the application program is in an executed state.

In the execution status determination process (S330), it may be determined whether the application program has entered the executed state. When the application program is in the executed state, light may be controlled to be emitted in a second pattern different from the first pattern in the second emission pattern control process (S340). When the application program is not in the executed state, the processes subsequent to the execution input reception process (S310) may be repeatedly performed.

In the low power mode entry determination process (S350), it may be determined whether an operation mode is to enter a low power mode based on a remaining battery capacity or a standby state while the application program is being executed. When there is no need to enter the low power mode, the processes subsequent to the execution input reception process (S310) may be repeatedly performed. When it is necessary to enter the low power mode, a screen for requesting a user input associated with whether the operation mode is to enter the low power mode may be displayed on the display in the screen display process (S355).

In the emission region control process (S360), a specific region of the touch pad may be controlled to emit light at a third time point when a user input is applied. In the second emission control process (S365), the light emission amount may be controlled to decrease until a fourth time point when the operation mode has entered the low power mode or until a certain period of time from the fourth time point.

The foregoing description has been given of the method for controlling the electronic device having the haptic and touch pad active region, to which the optical module is applied, according to the disclosure. Hereinafter, technical effects of an electronic device having a haptic and touch pad active region, to which an optical module is applied, and a method for controlling the same according to the disclosure will be described.

Hereinafter, technical effects of an electronic device having a haptic and touch pad active region, to which an optical module is applied, according to the disclosure will be described.

According to the specification, an electronic device having a haptic and touch pad active region to which an optical module is applied may be provided, so that a user may intuitively receive information about a current status of the electronic device during the use of the electronic device.

According to the specification, light-emitting elements may be additionally arranged on a substrate arranged inside a touch pad region, to feedback whether a user input has been normally applied, by emitting light through a specific region, thereby forming a feedback region adjacent to a region where the user input has been applied.

According to the specification, an intuitive user interface may be provided to a user by controlling light emission through a slit region of a left side and/or a right side corresponding to opposite sides of a touch pad region, to suppress a touch input from being applied out of the touch pad region.

According to the specification, a haptic active region where haptic feedback associated with a touch input is provided may be provided to a user through an intuitive user interface.

According to the specification, a structural design and algorithm may be provided to feedback whether a user input has been normally applied, by emitting light through a specific region of glass arranged on a touch pad region.

According to the specification, a structural design and algorithm may be provided to feedback whether a user input has been normally applied through region-based control of light-emitting elements and haptic elements arranged below a touch pad region.

According to the specification, information about a current status of an electronic device may be fed back to a user according to power on/off and an execution of an application program, thereby improving intuitiveness and also improving aesthetics by applying a gradation of an emission region.

Further scope of applicability of the disclosure will become apparent from the foregoing detailed description. It should be understood, however, that the detailed description and specific examples, such as the preferred embodiment of the invention, are given by way of illustration only, since various changes and modifications within the spirit and scope of the invention will be apparent to those skilled in the art.

In relation to the disclosure described above, the design of specific components including a controller and their operations in an electronic device having a haptic and touch pad active region to which an optical module is applied may be implemented as a computer-readable code on a medium in which a program is recorded. The computer-readable media may include all kinds of recording apparatuses in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). In addition, the computer may also include the controller 180 of the terminal. The above detailed description should not be limitedly construed in all aspects and should be considered as illustrative. The scope of the disclosure should be determined by reasonable interpretation of the appended claims and all changes that come within the equivalent scope of the disclosure are included in the scope of the disclosure.

## Claims

1. An electronic device having a keyboard, the electronic device comprising:
a display configured to display screen information; and
a base portion operably coupled to the display, having a keyboard region, and configured to detect a touch input;
wherein the base portion comprises:
a touch pad region configured to detect a touch input, and comprising at least one light source; and
a lighting lens portion formed along opposite sides of the touch pad region, and
light is emitted through at least one side of the touch pad region when a touch input is detected in the touch pad region.

2. The electronic device of claim 1, further comprising
a processor configured to control a color, brightness, or emission region of the emitted light according to an input pattern of the touch input.

3. The electronic device of claim 2, wherein
the processor controls light of a first color, light of a second color, or light of a third color to be emitted through the opposite sides when a single touch input, a double touch input, or a triple touch input is input to the touch pad region.

4. The electronic device of claim 2, wherein
the processor changes brightness of the light at a speed of a first slope when a drag touch input is applied to the touch pad region and a dragging speed of the drag input is a threshold speed or less, and
changes the brightness of the light at a speed of a second slope greater than the first slope when the dragging speed exceeds the threshold speed.

5. The electronic device of claim 2, wherein
the processor controls light to be emitted through only a left side or a right side when a detection point of a drag input on the touch pad region approaches the left side or the right side of the touch pad region by a first threshold distance or less.

6. The electronic device of claim 2, wherein
the processor increases the brightness of the light as the detection point approaches a left side or a right side while light is emitted through only the left side or the right side.

7. The electronic device of claim 5, wherein
the processor controls the light to change in color or to blink when the detection point reaches the left side or the right side or approaches below a second threshold distance while light is emitted through only the left side or the right side, and
the second threshold distance is shorter than the first threshold distance.

8. The electronic device of claim 2, wherein
the processor detects a remaining battery capacity of the electronic device,
controls the light to be emitted at a first height through a slit region on a left side or a right side of the touch pad region when the remaining battery capacity is lower than or equal to a first threshold value,
controls the light to be emitted at a second height through the slit region when the remaining battery capacity is lower than or equal to a second threshold value, and
controls the light to be emitted at a third height through the slit region when the remaining battery capacity is higher than or equal to a third threshold value, and
the second height is higher than the first height, and the third height is higher than the second height.

9. The electronic device of claim 2, wherein
the processor detects whether a first event of a file download completion, a second event of a new email reception, or a third event of a preset pattern occurs, and
controls emission and blinking of the light to be repeatedly performed in a slit region of a left side or a right side of the touch pad region or controls an icon to be displayed in a region adjacent to an inside of the slit region when at least one of the first to third events is detected.

10. The electronic device of claim 2, wherein
the processor controls the brightness and color of the light emitted through the at least one side of the touch pad region in conjunction with a backlight in the keyboard region or in conjunction with a function key associated with brightness adjustment of the keyboard region.

11. The electronic device of claim 2, wherein
the processor detects a keyboard input applied to the keyboard region or a motion input applied to the keyboard region, and
deactivates a touch recognition chip arranged in the touch pad region so that the touch input is not recognized in the touch pad region when the detection is made.

12. The electronic device of claim 11, wherein
the processor changes the color of the light emitted through a slit region of a left side or a right side of the touch pad region while deactivating the touch recognition chip when the detection is made.

13. The electronic device of claim 2, wherein
the processor detects whether an input device by which a different touch input is applicable, separate from a touch input to be applied to the touch pad region, is connected, and
deactivates a touch recognition chip arranged in the touch pad region when the input device is connected.

14. The electronic device of claim 2, wherein
the processor detects whether an input device by which a different touch input is applicable, separate from a touch input to be applied to the touch pad region, has been connected or disconnected, and
when the input device is connected or disconnected, controls the light to be emitted or to blink through a slit region of a left side or a right side of the touch pad region or changes the color or brightness of the emitted light.

15. The electronic device of claim 2, wherein
the processor detects ambient brightness information based on at least one of a camera, a light sensor, or a current time, and
controls brightness of a slit region of a left side or a right side of the touch pad region based on the ambient brightness information.

16. The electronic device of claim 3, wherein
an emission state of one side region of the touch pad region changes when a single tap input is applied to the touch pad region, and
an emission state of another side region of the touch pad region changes when a double-tap input is applied to the touch pad region.

17. The electronic device of claim 1, wherein
the base portion comprises:
glass arranged in a top region of the touch input region and configured to emit light through a specific region;
a transparent layer arranged below the glass to transmit light from the light source therethrough; and
an opaque layer arranged below the transparent layer to cut the light,
the light is emitted from a left side and a right side of the touch pad region through the transparent layer corresponding to a slot region of the opaque layer,
the light source comprises a plurality of light-emitting elements arranged in plurality on each of the left side or the right side of the touch pad region, and
the light-emitting elements are arranged in one axial direction of a substrate arranged in the touch pad region.

18. The electronic device of claim 17, wherein
the lighting lens portion comprises:
a first part formed with a first thickness in a lower region of the light-emitting element; and
a second part formed with a second thickness thicker than the first thickness at an end portion of the first part, and configured to allow light emitted from the light-emitting element to pass therethrough.

19. The electronic device of claim 17, wherein
the lighting lens portion comprises:
a third part formed with a third thickness thicker than the second thickness at an end portion of the second part, and configured to allow the light to be emitted through a specific region, and
an inner surface of the third part is spaced apart from a side surface of the substrate to oppose the side surface of the substrate.

20. The electronic device of claim 17, wherein
when the touch pad region is pressed, the processor detects a touched region of any one of haptic sensors arranged on the substrate, and pressure applied to the touched region, and
controls a haptic motor arranged on the substrate to vibrate the touched region.
